# EUROPEAN PATENT APPLICATION

(11) **EP 4 750 193 A1**
(43) Date of publication of application: **27.05.2026**
(21) Application number: 24850661.0
(22) Date of filing: 07.06.2024
(51) Int. Cl.: H04W 72/0446, H04W 72/23, H04W 72/1268, H04L 5/00

(54) **COMMUNICATION METHOD AND APPARATUS BASED ON CONFIGURED GRANT**

(30) Priority: 10.08.2023 CN 202311009777; 07.09.2023 CN 202311160748
(71) Applicant: Huawei Technologies Co., Ltd., Shenzhen, Guangdong 518129 (CN)
(72) Inventor: ZHANG, Yanqing, Shenzhen, Guangdong 518129 (CN); XU, Haibo, Shenzhen, Guangdong 518129 (CN)
(74) Representative: Pfenning, Meinig & Partner mbB
(86) International application number: PCT/CN2024/098192
(87) International publication number: WO 2025/031009

(57) **Abstract**

This application relates to a configured grant-based communication method and apparatus. The method includes: A first apparatus receives first information indicating a first time period, and the first apparatus sends first indication information on a first CGO, where the first indication information indicates whether each of N configured grant occasions CGOs is used. The first CGO is not within the first time period. The first indication information is determined based on a data amount of first data, and the first data is obtained by the first apparatus before a start moment of the first CGO.

## Description

### CROSS-REFERENCE TO RELATED APPLICATIONS

This application claims priorities to Chinese Patent Application No. 202311009777.X, filed with the China National Intellectual Property Administration on August 10, 2023 and entitled "CONFIGURED GRANT-BASED COMMUNICATION METHOD AND APPARATUS", and to Chinese Patent Application No. 202311160748.3, filed with the China National Intellectual Property Administration on September 7, 2023 and entitled "CONFIGURED GRANT-BASED COMMUNICATION METHOD AND APPARATUS", both of which are incorporated herein by reference in their entireties.

### TECHNICAL FIELD

This application relates to the field of communication technologies, and in particular, to a configured grant (configured grant, CG) based communication method and apparatus.

### BACKGROUND

With continuous development of a wireless communication system, a data transmission delay is continuously reduced, and a transmission capacity is increasingly large. The wireless communication system gradually penetrates into some services with high real-time performance and high data capacity requirements, such as video transmission, cloud gaming, and extended reality (extended reality, XR). The XR is an environment that combines a real world and a virtual world, supports human-computer interaction, and is generated by using a computer technology and wearable devices; and is a collective term of various forms such as augmented reality (augmented reality, AR), virtual reality (virtual reality, VR), and mixed reality (mixed reality, MR).

An XR service is used as an example. A data frame of the XR service may be transmitted between an access network device and a terminal in a semi-persistent scheduling manner. For example, the access network device may configure a plurality of configured grant occasions (configured grant occasion, CGO) to transmit one data frame. An amount of data that can be carried on the plurality of CGOs may be greater than a data amount of the data frame. To avoid a waste of resources, the terminal may notify the access network device whether the CGO is used. Further research is required on how to notify whether the CGO is used.

### SUMMARY

To resolve the foregoing technical problem, this application provides a CG-based communication method and apparatus, to notify whether a CGO is used.

According to a first aspect, this application provides a communication method. The method may be performed by a first apparatus. The first apparatus may be a terminal or a module (for example, a circuit or a chip) in the terminal, or may be a logical node, a logical module, or software that can implement all or some functions of the terminal. The method may include: The first apparatus receives first information, where the first information may indicate a first time period. If a first CGO is not within the first time period, the first apparatus may send first indication information on the first CGO. The first indication information indicates whether each of N CGOs is used, and N is a positive integer. The first indication information is determined based on a data amount of first data, and the first data is obtained by the first apparatus before a start moment of the first CGO.

According to the method, the first information received by the first apparatus may indicate the first time period. When the first apparatus sends the first indication information on the first CGO outside the first time period, the first indication information may be determined based on data obtained before the start moment of the first CGO, so that content of the first indication information can be accurately determined, and whether the N CGOs are used can be accurately notified.

In a possible design, when a second CGO is within the first time period, the first apparatus may send second indication information on the second CGO. The second indication information is not determined based on the data amount, the second indication information may indicate that M CGOs are used, and M is a positive integer. The M CGOs include a part or all of the N CGOs. M may be determined by the first apparatus based on second information. According to the design, the first apparatus does not determine, based on an incorrect data amount, whether a CGO is used, to avoid affecting data transmission and reduce a data transmission delay.

In a possible design, the first apparatus may not send, on the second CGO, third indication information indicating whether the M CGOs are used. According to the design, the first apparatus does not determine, based on an incorrect data amount, whether a CGO is used, to avoid affecting data transmission and reduce a data transmission delay.

In a possible design, before the first apparatus sends the first indication information on the first CGO, the first apparatus may receive third information, and determine a first CG periodicity based on the third information. The first time period is within the first CG periodicity, and a start moment of the first time period is the same as a start moment of the first CG periodicity, or an interval between the start moment of the first time period and the start moment of the first CG periodicity is a first time interval. In the design, the start moment of the first time period is related to the start moment of the first CG periodicity. In this way, the second apparatus does not need to indicate, to the first apparatus, absolute time corresponding to the start moment of the first time period, to reduce signaling overheads.

In a possible design, before the first apparatus sends the first indication information on the first CGO, the first apparatus may further determine a second time period. The first CGO is within the second time period, the second time period is within the first CG periodicity, and an interval between a start moment of the second time period and the start moment of the first CG periodicity is a second time interval. According to the design, when the first apparatus sends the first indication information on the first CGO in the second time period, the first indication information may be determined based on data obtained before the start moment of the first CGO, so that content of the first indication information can be accurately determined, and whether the N CGOs are used can be accurately notified.

In a possible design, an end moment of the second time period is an end moment of the first CG periodicity, or the end moment of the second time period is an end moment of a third CGO, and the third CGO is a last valid CGO in the first CG periodicity. In the design, the end moment of the second time period is related to the end moment of the first CG periodicity, or the end moment of the second time period is related to a valid CGO in the first CG periodicity. In this way, the second apparatus does not need to indicate, to the first apparatus, absolute time corresponding to the end moment of the second time period, to reduce signaling overheads.

In a possible design, the second time interval is the same as duration of the first time period. In this way, the second apparatus does not need to explicitly indicate the second time interval to the first apparatus, to reduce signaling overheads.

In a possible design, a start moment of the N CGOs is later than an end moment of the first CGO. In this way, the first CGO may accurately indicate whether the N CGOs following the first CGO are used.

In a possible design, the start moment of the N CGOs is the same as the end moment of the first CGO, or a time interval between the start moment of the N CGOs and the end moment of the first CGO is a third time interval. The third time interval is determined by the first apparatus based on fourth information, and the fourth information is received by the first apparatus. In the design, the start moment of the N CGOs is related to the end moment of the first CGO, and the first apparatus may quickly determine the start moment of the N CGOs based on the end moment of the first CGO.

In a possible design, the N CGOs include the first CGO, a start moment of the N CGOs is a start moment of a fourth CGO, and the fourth CGO is a 1^{st} valid CGO in the first CG periodicity. In this way, the first apparatus may accurately indicate whether the N CGOs including the first CGO are used.

Optionally, the N CGOs are within the first CG periodicity. According to the design, the first apparatus may accurately indicate whether the N CGOs in the first CG periodicity are used.

In a possible design, the first apparatus may further determine a third time period. When N1 CGOs in the N CGOs are within the third time period, the first indication information may indicate that the N1 CGOs are used, and N1 is a positive integer less than or equal to N. According to the design, the first indication information may indicate that the CGO in the third time period is used, so that the CGO is not incorrectly indicated as unused, to avoid affecting data transmission and reduce the data transmission delay.

In a possible design, the third time period is within the first CG periodicity. A start moment of the third time period is the same as the start moment of the first CG periodicity, or an interval between the start moment of the third time period and the start moment of the first CG periodicity is a fourth time interval, and the first CG periodicity is determined by the first apparatus based on the third information. In the design, the start moment of the third time period is related to the start moment of the first CG periodicity. In this way, the second apparatus does not need to indicate, to the first apparatus, absolute time corresponding to the start moment of the third time period, to reduce signaling overheads.

In a possible design, an end moment of the third time period is the same as the end moment of the first CG periodicity, or the end moment of the third time period is the end moment of the third CGO, where the third CGO is the last valid CGO in the first CG periodicity, or an interval between the end moment of the third time period and the end moment of the first CG periodicity is a fifth time interval, or an interval between the end moment of the third time period and the start moment of the first CG periodicity is a sixth time interval. In the design, the end moment of the third time period is related to the end moment of the first CG periodicity, or is related to the last valid CGO in the first CG periodicity. In this way, the second apparatus does not need to indicate, to the first apparatus, absolute time corresponding to the end moment of the third time period, to reduce signaling overheads.

In a possible design, the first CGO and the N1 CGOs are within different CG periodicities. In this way, when the first CGO and the N1 CGOs in the third time period are within different CG periodicities, the first indication information sent on the first CGO may indicate that the N1 CGOs are used, so that the CGO is not incorrectly indicated as unused, to avoid affecting data transmission and reduce the data transmission delay.

In a possible design, the first apparatus is first user equipment (user equipment, UE).

According to a second aspect, this application provides a communication method. The method may be performed by a second apparatus. The second apparatus may be an access network device or a module (for example, a circuit or a chip) in the access network device, or may be a logical node, a logical module, or software that can implement all or some functions of the access network device. The method may include: The second apparatus sends first information, where the first information indicates a first time period. The second apparatus receives first indication information on a first CGO. The first CGO is not within the first time period. The first indication information indicates whether each of N CGOs is used, N is a positive integer, the first indication information is determined based on a data amount of first data, and the first data is obtained by a first apparatus before a start moment of the first CGO.

In a possible design, the second apparatus may receive second indication information on a second CGO, where the second indication information indicates that M CGOs are used, M is a positive integer, and the M CGOs include a part or all of the N CGOs. The second CGO is within the first time period, the second indication information is not determined based on the data amount, and M is determined by the first apparatus based on second information.

In a possible design, before the second apparatus receives the first indication information on the first CGO, the second apparatus may send third information, where the third information is used to determine a first CG periodicity. The first time period is within the first CG periodicity, and a start moment of the first time period is the same as a start moment of the first CG periodicity, or an interval between the start moment of the first time period and the start moment of the first CG periodicity is a first time interval.

In a possible design, the first CGO is within a second time period, the second time period is within the first CG periodicity, and an interval between a start moment of the second time period and the start moment of the first CG periodicity is a second time interval.

In a possible design, an end moment of the second time period is an end moment of the first CG periodicity, or the end moment of the second time period is an end moment of a third CGO, and the third CGO is a last valid CGO in the first CG periodicity.

In a possible design, the second time interval is the same as duration of the first time period.

In a possible design, a start moment of the N CGOs is later than an end moment of the first CGO.

In a possible design, the start moment of the N CGOs is the same as the end moment of the first CGO; or before the second apparatus receives the first indication information on the first CGO, the second apparatus may send fourth information, where the fourth information indicates a third time interval, and a time interval between the start moment of the N CGOs and the end moment of the first CGO is the third time interval.

In a possible design, the N CGOs include the first CGO, a start moment of the N CGOs is a start moment of a fourth CGO, and the fourth CGO is a 1^{st} valid CGO in the first CG periodicity.

In a possible design, the N CGOs are within the first CG periodicity.

In a possible design, when N1 CGOs in the N CGOs are within a third time period, the first indication information indicates that the N1 CGOs are used, and N1 is a positive integer less than or equal to N.

In a possible design, the third time period is within the first CG periodicity. A start moment of the third time period is the same as the start moment of the first CG periodicity, or an interval between the start moment of the third time period and the start moment of the first CG periodicity is a fourth time interval, and the first CG periodicity is determined by the second apparatus.

In a possible design, an end moment of the third time period is the same as the end moment of the first CG periodicity, or the end moment of the third time period is the end moment of the third CGO, where the third CGO is the last valid CGO in the first CG periodicity, or an interval between the end moment of the third time period and the end moment of the first CG periodicity is a fifth time interval, or an interval between the end moment of the third time period and the start moment of the first CG periodicity is a sixth time interval.

In a possible design, the first CGO and the N1 CGOs are within different CG periodicities.

In a possible design, the second apparatus is a first access network (access network, AN) device.

In a possible design, the first access network device is a first radio access network (radio access network, RAN) device.

In a possible design, the second apparatus is a first base station (base station).

According to a third aspect, this application provides a communication method. The method may be performed by a first apparatus. The first apparatus may be a terminal or a module (for example, a circuit or a chip) in the terminal, or may be a logical node, a logical module, or software that can implement all or some functions of the terminal. The method may include: The first apparatus determines a first CG, where the first CG includes a first CGO, the first CGO is used to transmit a first MAC PDU, and the first MAC PDU is a de-prioritized MAC PDU. The first apparatus may send first indication information on a second CGO, where the first indication information indicates that the first CGO is not used, and the second CGO is before the first CGO.

Optionally, before the first apparatus sends the first indication information on the second CGO, the first apparatus may determine, at a first moment, that the first CGO is used to transmit the first MAC PDU, and determine, at a second moment, that the first MAC PDU is the de-prioritized MAC PDU. The first moment is earlier than the second moment.

According to the method, when indicating whether to use the first CGO, the first apparatus considers whether the first CGO is available. When the first MAC PDU corresponding to the first CGO is the de-prioritized MAC PDU, the first CGO is unavailable, and the first apparatus indicates that the first CGO is not used. In this way, the second apparatus does not need to detect a CGO corresponding to a de-prioritized MAC PDU, to reduce complexity of blind detection by the second apparatus.

In a possible design, before the first apparatus sends the first indication information on the second CGO, the first apparatus may determine a second CG. The second CG includes a third CGO, and a resource corresponding to the first CGO overlaps a resource corresponding to the third CGO. According to the design, when the resource corresponding to the first CGO overlaps the resource corresponding to the third CGO, the first apparatus may indicate that the first CGO is not used. In this way, the second apparatus does not need to detect a CGO corresponding to a de-prioritized MAC PDU, to reduce complexity of blind detection by the second apparatus.

In a possible design, before the first apparatus sends the first indication information on the second CGO, the first apparatus may receive first configuration information, where the first configuration information indicates to send the first indication information on a CGO of the first CG. According to the design, the first apparatus may send the first indication information on the CGO of the first CG based on the first configuration information.

According to a fourth aspect, this application provides a communication method. The method may be performed by a second apparatus. The second apparatus may be an access network device or a module (for example, a circuit or a chip) in the access network device, or may be a logical node, a logical module, or software that can implement all or some functions of the access network device. The method may include: The second apparatus sends first information, where the first information indicates a first CG, the first CG includes a first CGO, the first CGO is used to transmit a first MAC PDU, and the first MAC PDU is a de-prioritized MAC PDU. The second apparatus may receive first indication information on a second CGO, where the first indication information indicates that the first CGO is not used, and the second CGO is before the first CGO.

In a possible design, before the second apparatus receives the first indication information on the second CGO, the second apparatus may send second information, where the second information indicates a second CG, the second CG includes a third CGO, and a resource corresponding to the first CGO overlaps a resource corresponding to the third CGO.

In a possible design, before the second apparatus receives the first indication information on the second CGO, the second apparatus may send first configuration information, where the first configuration information indicates to send the first indication information on a CGO of the first CG.

According to a fifth aspect, this application provides a communication method. The method may be performed by a first apparatus. The first apparatus may be a terminal or a module (for example, a circuit or a chip) in the terminal, or may be a logical node, a logical module, or software that can implement all or some functions of the terminal. The method may include: The first apparatus determines a second time period. The first apparatus sends first indication information on a first CGO, where the first indication information indicates whether each of N CGOs is used, and N is a positive integer. The first CGO is within the second time period, the first indication information is determined based on a data amount of first data, and the first data is obtained by the first apparatus before a start moment of the first CGO.

In a possible design, the second time period is within a first CG periodicity, and an interval between a start moment of the second time period and a start moment of the first CG periodicity is a second time interval.

In a possible design, an end moment of the second time period is an end moment of the first CG periodicity, or the end moment of the second time period is an end moment of a third CGO, and the third CGO is a last valid CGO in the first CG periodicity.

In a possible design, a start moment of the N CGOs is later than an end moment of the first CGO.

In a possible design, the start moment of the N CGOs is the same as the end moment of the first CGO, or a time interval between the start moment of the N CGOs and the end moment of the first CGO is a third time interval. The third time interval is determined by the first apparatus based on fourth information, and the fourth information is received by the first apparatus.

In a possible design, the N CGOs include the first CGO, a start moment of the N CGOs is a start moment of a fourth CGO, and the fourth CGO is a 1^{st} valid CGO in the first CG periodicity.

Optionally, the N CGOs are within the first CG periodicity.

In a possible design, the first apparatus may further determine a third time period. When N1 CGOs in the N CGOs are within the third time period, the first indication information may indicate that the N1 CGOs are used, and N1 is a positive integer less than or equal to N.

In a possible design, the third time period is within the first CG periodicity. A start moment of the third time period is the same as the start moment of the first CG periodicity, or an interval between the start moment of the third time period and the start moment of the first CG periodicity is a fourth time interval, and the first CG periodicity is determined by the first apparatus based on the third information.

In a possible design, an end moment of the third time period is the same as the end moment of the first CG periodicity, or the end moment of the third time period is the end moment of the third CGO, where the third CGO is the last valid CGO in the first CG periodicity, or an interval between the end moment of the third time period and the end moment of the first CG periodicity is a fifth time interval, or an interval between the end moment of the third time period and the start moment of the first CG periodicity is a sixth time interval.

In a possible design, the first CGO and the N1 CGOs are within different CG periodicities.

According to a sixth aspect, this application provides a communication method. The method may be applied to a second apparatus. The second apparatus may be an access network device or a module (for example, a circuit or a chip) in the access network device, or may be a logical node, a logical module, or software that can implement all or some functions of the access network device. The method may include: The second apparatus receives first indication information on a first CGO, where the first indication information indicates whether each of N CGOs is used, and N is a positive integer. The first CGO is within a second time period, the first indication information is determined based on a data amount of first data, and the first data is obtained by the first apparatus before a start moment of the first CGO.

In a possible design, the second time period is within a first CG periodicity, and an interval between a start moment of the second time period and a start moment of the first CG periodicity is a second time interval.

In a possible design, an end moment of the second time period is an end moment of the first CG periodicity, or the end moment of the second time period is an end moment of a third CGO, and the third CGO is a last valid CGO in the first CG periodicity.

In a possible design, a start moment of the N CGOs is later than an end moment of the first CGO.

In a possible design, the start moment of the N CGOs is the same as the end moment of the first CGO, or a time interval between the start moment of the N CGOs and the end moment of the first CGO is a third time interval. The third time interval is determined by the first apparatus based on fourth information, and the fourth information is received by the first apparatus.

Optionally, the N CGOs are within the first CG periodicity.

In a possible design, when N1 CGOs in the N CGOs are within a third time period, the first indication information may indicate that the N1 CGOs are used, and N1 is a positive integer less than or equal to N.

In a possible design, the third time period is within the first CG periodicity. A start moment of the third time period is the same as the start moment of the first CG periodicity, or an interval between the start moment of the third time period and the start moment of the first CG periodicity is a fourth time interval, and the first CG periodicity is determined by the first apparatus based on the third information.

In a possible design, an end moment of the third time period is the same as the end moment of the first CG periodicity, or the end moment of the third time period is the end moment of the third CGO, where the third CGO is the last valid CGO in the first CG periodicity, or an interval between the end moment of the third time period and the end moment of the first CG periodicity is a fifth time interval, or an interval between the end moment of the third time period and the start moment of the first CG periodicity is a sixth time interval.

In a possible design, the first CGO and the N1 CGOs are within different CG periodicities.

According to a seventh aspect, this application provides a communication apparatus. The communication apparatus may be a terminal or a module (for example, a circuit or a chip) in the terminal, or may be a logical node, a logical module, or software that can implement all or some functions of the terminal. The communication apparatus has a function of implementing the first aspect, the third aspect, or the fifth aspect. For example, the communication apparatus includes a corresponding module, unit, or means for performing the operation in the first aspect, the third aspect, or the fifth aspect. The module, unit, or means may be implemented by software, may be implemented by hardware, or may be implemented by hardware executing corresponding software.

In a possible design, the communication apparatus includes a processing unit and an interface unit. The interface unit may receive and send a signal, to implement communication between the communication apparatus and another apparatus. The processing unit may perform some internal operations of the communication apparatus. Functions performed by the processing unit and the interface unit may correspond to the operations in the first aspect, the third aspect, or the fifth aspect.

In a possible design, the communication apparatus includes a processor, and the processor may be coupled to a memory. The memory may store a necessary computer program or instructions for implementing the function in the first aspect, the third aspect, or the fifth aspect. The processor may execute the computer program or the instructions stored in the memory, and when the computer program or the instructions are executed, the communication apparatus is enabled to implement the method in any possible design of the first aspect, the third aspect, or the fifth aspect.

In a possible design, the communication apparatus includes a processor and a memory. The memory may store a necessary computer program or instructions for implementing the function in the first aspect, the third aspect, or the fifth aspect. The processor may execute the computer program or the instructions stored in the memory, and when the computer program or the instructions are executed, the communication apparatus is enabled to implement the method in any possible design of the first aspect, the third aspect, or the fifth aspect.

In a possible design, the communication apparatus includes a processor and an interface circuit. The processor communicates with another apparatus via the interface circuit, and performs the method in any possible design of the first aspect, the third aspect, or the fifth aspect.

According to an eighth aspect, this application provides a communication apparatus. The communication apparatus may be an access network device or a module (for example, a circuit or a chip) in the access network device, or may be a logical node, a logical module, or software that can implement all or some functions of the access network device. The communication apparatus has a function of implementing the second aspect, the fourth aspect, or the sixth aspect. For example, the communication apparatus includes a corresponding module, unit, or means for performing the operation in the second aspect, the fourth aspect, or the sixth aspect. The module, unit, or means may be implemented by software, may be implemented by hardware, or may be implemented by hardware executing corresponding software.

In a possible design, the communication apparatus includes a processing unit and an interface unit. The interface unit may receive and send a signal, to implement communication between the communication apparatus and another apparatus. The processing unit may perform some internal operations of the communication apparatus. Functions performed by the processing unit and the interface unit may correspond to the operations in the second aspect, the fourth aspect, or the sixth aspect.

In a possible design, the communication apparatus includes a processor, and the processor may be coupled to a memory. The memory may store a necessary computer program or instructions for implementing the function in the second aspect, the fourth aspect, or the sixth aspect. The processor may execute the computer program or the instructions stored in the memory, and when the computer program or the instructions are executed, the communication apparatus is enabled to implement the method in any possible design of the second aspect, the fourth aspect, or the sixth aspect.

In a possible design, the communication apparatus includes a processor and a memory. The memory may store a necessary computer program or instructions for implementing the function in the second aspect, the fourth aspect, or the sixth aspect. The processor may execute the computer program or the instructions stored in the memory, and when the computer program or the instructions are executed, the communication apparatus is enabled to implement the method in any possible design of the second aspect, the fourth aspect, or the sixth aspect.

In a possible design, the communication apparatus includes a processor and an interface circuit. The processor communicates with another apparatus via the interface circuit, and performs the method in any possible design of the second aspect, the fourth aspect, or the sixth aspect.

It may be understood that in the seventh aspect or the eighth aspect, the processor may be implemented by hardware or implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a ninth aspect, this application provides a communication system. The communication system may include the communication apparatus in the seventh aspect and the communication apparatus in the eighth aspect. For example, the communication system includes a terminal and an access network device. The terminal performs the communication method provided in the first aspect, and the access network device performs the communication method provided in the second aspect. Alternatively, the terminal performs the communication method provided in the third aspect, and the access network device performs the communication method provided in the fourth aspect. Alternatively, the terminal performs the communication method provided in the fifth aspect, and the access network device performs the communication method provided in the sixth aspect.

According to a tenth aspect, this application provides a computer-readable storage medium. The computer storage medium stores computer-readable instructions. When a computer reads and executes the computer-readable instructions, the computer is enabled to perform the method in any possible design of any one of the first aspect to the sixth aspect.

According to an eleventh aspect, this application provides a computer program product. When a computer reads and executes the computer program product, the computer is enabled to perform the method in any possible design of any one of the first aspect to the sixth aspect.

According to a twelfth aspect, this application provides a chip. The chip reads a computer program stored in a memory, to perform the method in any possible design of any one of the first aspect to the sixth aspect.

For technical effect that can be achieved in any one of the second aspect and the fourth aspect to the twelfth aspect, refer to the descriptions of the technical effect that can be achieved in any possible design of the first aspect or the third aspect. Repeated parts are not described.

### BRIEF DESCRIPTION OF DRAWINGS

FIG. 1 is a diagram of an architecture of a communication system according to this application;
FIG. 2A to FIG. 2F are several diagrams in which unused transmission occasion (unused transmission occasion(s), UTO)-uplink control information (uplink control information, UCI) indicates whether a CGO is used according to this application;
FIG. 3 is a flowchart of a first communication method according to this application;
FIG. 4A to FIG. 4G are several other diagrams in which UTO-UCI indicates whether a CGO is used according to this application;
FIG. 5 is a flowchart of a second communication method according to this application;
FIG. 6 is a flowchart of a third communication method according to this application;
FIG. 7A and FIG. 7B are still several other diagrams in which UTO-UCI indicates whether a CGO is used according to this application;
FIG. 8 is a flowchart of a fourth communication method according to this application;
FIG. 9 is a flowchart of a fifth communication method according to this application;
FIG. 10 is a diagram of a structure of a communication apparatus according to this application; and
FIG. 11 is a diagram of a structure of another communication apparatus according to this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

Various aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

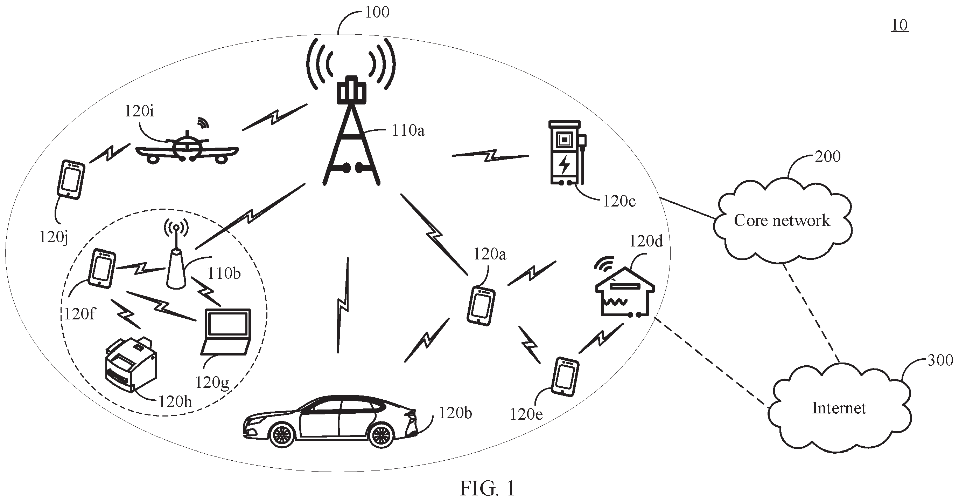

For ease of understanding embodiments of this application, FIG. 1 is a possible and non-limiting diagram of a system. As shown in FIG. 1, a communication system 10 includes a RAN 100 and a core network (core network, CN) 200. Optionally, the communication system 10 may further include the Internet 300.

The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates two or more of the foregoing systems.

The RAN node 110 may also be sometimes referred to as a RAN entity, an access node, or the like, and forms a part of the communication system, to help a terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

The RAN node may also have different expressions, for example, an access network device. In this application, unless otherwise specified, the access network device is used for expression.

In a possible scenario, the access network device may be a base station, an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU). All or some functions of the access network device in this application may alternatively be implemented through a software function running on hardware, or may be implemented through a virtualization function instantiated on a platform (for example, a cloud platform). Alternatively, the access network device in this application may be a logical node, a logical module, or software that can implement all or some functions of the access network device.

In another possible scenario, a plurality of access network devices cooperate to assist the terminal in implementing radio access, and different access network devices respectively implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, UE, a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), Internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In the following of this application, "sending information to a device (for example, a terminal)" may be understood as that a destination of the information is the device, and may include directly or indirectly sending the information to the device. "Receiving information from a device (for example, a terminal)" may be understood as that a source of the information is the device, and may include directly or indirectly receiving the information from the device. Information may undergo necessary processing, for example, a format change, between the source for sending the information and the destination. However, the destination may understand valid information from the source. Similar descriptions in this application may be understood similarly, and details are not described herein.

The communication system and the service scenario described in embodiments of this application are intended to describe the technical solutions in embodiments of this application more clearly, and do not constitute a limitation on the technical solutions provided in embodiments of this application. A person of ordinary skill in the art may learn that with evolution of network architectures and emergence of new service scenarios, the technical solutions provided in embodiments of this application are also applicable to a similar technical problem.

The following first explains and describes related terms in embodiments of this application. It should be noted that these explanations are intended to facilitate understanding of embodiments of this application, but should not be construed as a limitation to the protection scope claimed in this application.

### (1) Semi-persistent scheduling:

In semi-persistent scheduling, an access network device may allocate a periodic uplink resource and/or a periodic downlink resource to a terminal. An uplink resource is used as an example. The access network device configures one or more configured grants (configured grant, CG) for the terminal by using radio resource control (radio resource control, RRC) signaling and/or downlink control information (downlink control information, DCI). Each CG includes a periodic uplink resource. Then, the terminal may perform uplink transmission by using one or more of the periodic uplink resources.

A transmission resource for performing uplink transmission once may be referred to as a CG transmission occasion (configured grant occasion, CGO). The CG transmission occasion may also be replaced with another possible description, for example, a CG resource, a physical uplink shared channel (physical uplink shared channel, PUSCH) resource, a PUSCH opportunity, a PUSCH occasion, a CG uplink resource, a CG PUSCH resource, and a CG PUSCH transmission resource or transmission occasion.

(2) A valid CGO is a CGO that does not overlap, in terms of time, a time-frequency domain resource corresponding to at least one of a downlink symbol, a downlink slot, or a synchronization reference signal block (synchronization signal block, SSB). For example, a time-frequency domain resource corresponding to the valid CGO does not overlap, in terms of time, a time-frequency domain resource corresponding to at least one of a downlink symbol, a downlink slot, or an SSB. Non-overlapping includes partial non-overlapping and also includes total non-overlapping.

### (3) UTO-UCI:

To avoid a resource waste, the terminal may send UTO-UCI to the access network device, where the UTO-UCI may indicate whether one or more CGOs allocated by the access network device to the terminal are used. In this way, the access network device may reallocate an unused CGO to another terminal for use.

The UTO-UCI may be determined by the terminal or a medium access control (medium access control, MAC) layer (for example, a MAC entity) on the terminal based on a data amount of to-be-transmitted data or another criterion. The following uses an example in which the terminal determines the UTO-UCI based on the data amount of the to-be-transmitted data for description. Optionally, when UTO-UCI is carried on a first CGO of a CG 1, the terminal may determine the UTO-UCI based on a data amount of to-be-transmitted data that can be transmitted on the CG 1. For example, the CG 1 is bound to a logical channel (logical channel, LCH) #1, and can transmit data of the LCH #1. For example, there is still an LCH #2 bound to another CG. When the to-be-transmitted data of the terminal includes the data of the LCH #1 and data of the LCH #2, the terminal determines, based on a data amount of the data of the LCH #1, UTO-UCI carried on the first CGO of the CG 1. A binding relationship between the CG 1 and the LCH #1 may be indicated by the access network device. For example, the access network device sends an RRC message logical channel configuration (LogicalChannelConfig) to the terminal. The logical channel configuration may be used to configure a parameter of the LCH #1. An allowed CG list "allowedCG-List" in the logical channel configuration may indicate a CG bound to the LCH #1. If allowedCG-List includes the CG 1, the CG 1 is bound to the LCH #1, indicating that the data of the LCH #1 may be transmitted on a CGO of the CG 1. Optionally, for an LCH for which no binding relationship is configured, data of the LCH may be transmitted on a CGO of the CG 1 by default, that is, it is considered that the LCH is bound to all CGs.

Optionally, the UTO-UCI may include a bitmap, and each bit in the bitmap corresponds to one CGO. For example, the UTO-UCI transmitted on a CGO #a corresponds to N CGOs. In the bitmap, an m^{th} bit from a most significant bit (most significant bit, MSB) to a least significant bit (least significant bit, LSB) corresponds to an m^{th} CGO in the one or more CGOs, where m ranges from 1 to N, and N is a positive integer. A value of each bit indicates whether a CGO corresponding to the bit is used. For example, if the value of the bit is "1", it indicates that the CGO corresponding to the bit is not used; if the value of the bit is "0", it indicates that the CGO corresponding to the bit is used; or vice versa.

There may be a plurality of relationships between the CGO #a and the N CGOs, for example, a relationship 1, a relationship 2, a relationship 3, or a relationship 4.

### Relationship 1:

A first CG periodicity includes N valid CGOs: a CGO #1 to a CGO #N. If the CGO #a is one of the CGO #1 to the CGO #N, the UTO-UCI transmitted on the CGO #a corresponds to the CGO #1 to the CGO #N, and may indicate whether each of the CGO #1 to the CGO #N is used.

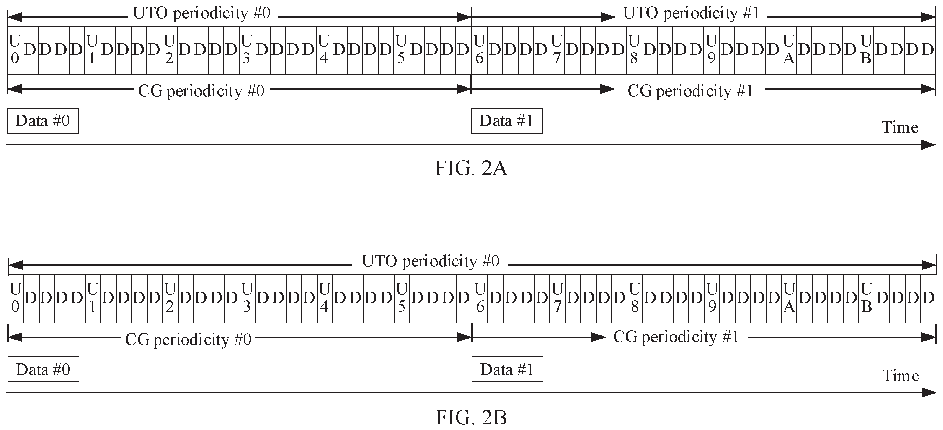

For example, as shown in FIG. 2A, the first CG periodicity is a CG periodicity #0. The CG periodicity #0 includes four valid CGOs: CGOs in slots U0 to U3. In the slot U0 or before the slot U0, data #0 may be obtained by the MAC entity of the terminal. In other words, the to-be-transmitted data obtained by the MAC entity includes the data #0. The data #0 is data that can be transmitted on the four valid CGOs in the to-be-transmitted data. For example, if the four valid CGOs are CGOs of the CG 1, and the CG 1 is bound to the LCH #1, and the data #0 in the to-be-transmitted data is data of the LCH #1, the data #0 is data that can be transmitted on the four valid CGOs in the to-be-transmitted data. The MAC entity may determine, based on a data amount of the data #0, to use three valid CGOs in the CG periodicity #0 to transmit the data #0. The three valid CGOs may be any three of the four valid CGOs, or may be selected by the MAC entity from the four valid CGOs according to a specified rule. For example, to reduce a transmission delay, the three valid CGOs may be CGOs in slots U0 to U2. This is not limited in this application. The following uses an example in which the three valid CGOs are CGOs in slots U0 to U2 for description. The terminal may transmit UTO-UCI #1 on a CGO in the slot U0. The UTO-UCI #1 is 0001, indicating that CGOs in the slots U0 to U2 are used and a CGO in the slot U3 is not used. The terminal may further separately transmit the UTO-UCI #1 on CGOs in the slots U1 and U2.

### Relationship 2:

P CG periodicities are continuous, each of the P CG periodicities includes N/P valid CGOs, the P CG periodicities include N valid CGOs in total: a CGO #1 to a CGO #N, and P is an integer greater than or equal to 2. If the CGO #a is one of the CGO #1 to the CGO #N, the UTO-UCI transmitted on the CGO #a corresponds to the CGO #1 to the CGO #N, and may indicate whether each of the CGO #1 to the CGO #N is used.

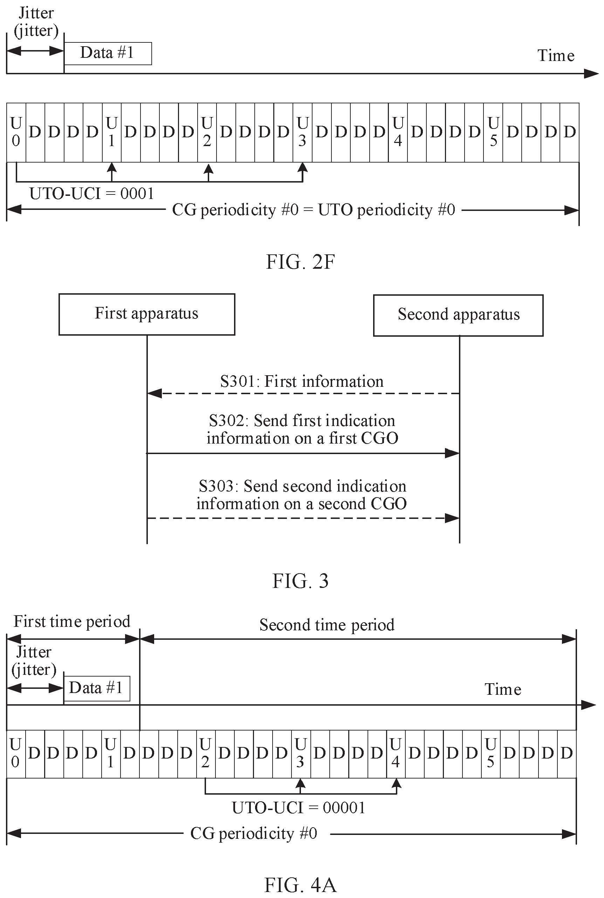

For example, as shown in FIG. 2B, the P CG periodicities include a CG periodicity #0 and a CG periodicity #1. The CG periodicity #0 includes four valid CGOs: CGOs in slots U0 to U3. The CG periodicity #1 includes four valid CGOs: CGOs in slots U6 to U9. In the slot U0 or before the slot U0, the data #0 may be obtained by the MAC entity of the terminal. For specific content of the data #0, refer to descriptions of FIG. 4A. Details are not described herein. The MAC entity may determine, based on a data amount of the data #0, to use three valid CGOs in the CG periodicity #0 and the CG periodicity #1 to transmit the data #0. The three valid CGOs are, for example, CGOs in slots U0 to U2. The terminal may transmit UTO-UCI #2 on a CGO in the slot U0. The UTO-UCI #2 is 00011111, indicating that CGOs in the slots U0 to U2 are used and CGOs in the slots U3 and U6 to U9 are not used. The terminal may further separately transmit the UTO-UCI #2 on CGOs in the slots U1 and U2.

### Relationship 3:

A first CG periodicity includes Q valid CGOs: a CGO #1 to a CGO #Q, and Q is a positive integer. a in the CGO #a may be an integer ranging from 1 to Q, that is, the CGO #a may be any one of the CGO #1 to the CGO #Q. If the CGO #a is one of the CGO #1 to a CGO #Q-1, the UTO-UCI transmitted on the CGO #a corresponds to a CGO #b to the CGO #Q, and may indicate whether each of the CGO #b to the CGO #Q is used. The CGO #b may be a CGO after the CGO #a in the first CG periodicity. The CGO #b may be a valid CGO adjacent to the CGO #a; or an interval between the CGO #b and the CGO #a is an interval #1. The interval #1 may be preset, or may be configured by the access network device for the terminal. Optionally, a start moment of the interval #1 may be an end moment of a PUSCH sent on the CGO #a. Optionally, if the CGO #a is the CGO #Q, the CGO #a may not indicate whether the CGO is used, and a size of the UTO-UCI transmitted on the CGO #a may be 0.

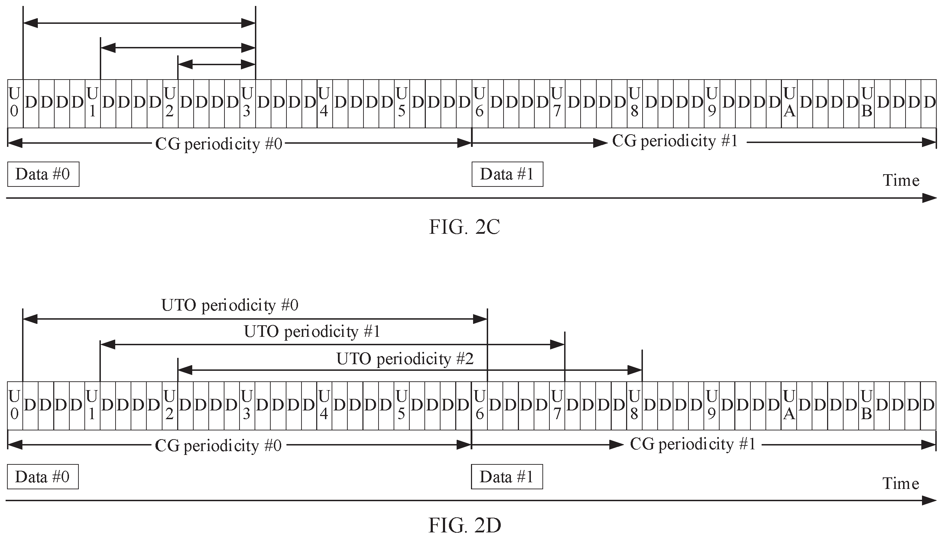

For example, as shown in FIG. 2C, the first CG periodicity is a CG periodicity #0. The CG periodicity #0 includes four valid CGOs: CGOs in slots U0 to U3. The CGO #b is a valid CGO adjacent to the CGO #a. In the slot U0 or before the slot U0, the data #0 may be obtained by the MAC entity of the terminal. For specific content of the data #0, refer to descriptions of FIG. 4A. Details are not described herein. The MAC entity may determine, based on a data amount of the data #0, to use three valid CGOs in the CG periodicity #0 to transmit the data #0. The three valid CGOs are, for example, CGOs in slots U0 to U2. The terminal may transmit UTO-UCI #3 on a CGO in the slot U0. The UTO-UCI #3 is 001, indicating that CGOs in the slots U1 and U2 are used and a CGO in the slot U3 is not used. The terminal may further transmit UTO-UCI #4 on a CGO in the slot U1. The UTO-UCI #4 is 01, indicating that a CGO in the slot U2 is used and a CGO in the slot U3 is not used. The terminal may further transmit UTO-UCI #5 on a CGO in the slot U2. The UTO-UCI #5 is 1, indicating that a CGO in the slot U3 is not used.

Optionally, in the relationship 3, the Q valid CGOs may alternatively be within at least two CG periodicities.

### Relationship 4:

The UTO-UCI transmitted on the CGO #a corresponds to N consecutive valid CGOs after the CGO #a, and indicates whether each of the N valid CGOs is used. A 1^{st} CGO in the N consecutive valid CGOs may be a valid CGO adjacent to a first CGO, or may be a valid CGO whose interval with the first CGO is an interval #2. A value of N may be preset, or may be configured by the access network device for the terminal. The interval #2 may be preset, or may be configured by the access network device for the terminal. Optionally, a start moment of the interval #2 may be an end moment of a PUSCH sent on the CGO #a.

For example, as shown in FIG. 2D, the CG periodicity #0 includes four valid CGOs: CGOs in slots U0 to U3. The CG periodicity #1 includes four valid CGOs: CGOs in slots U6 to U9. N is 4. In the slot U0 or before the slot U0, the data #0 may be obtained by the MAC entity of the terminal. For specific content of the data #0, refer to descriptions of FIG. 4A. Details are not described herein. The MAC entity may determine, based on a data amount of the data #0, to use three valid CGOs in the CG periodicity #0 and the CG periodicity #1 to transmit the data #0. The three valid CGOs are, for example, CGOs in slots U0 to U2. The terminal may transmit UTO-UCI #6 on a CGO in the slot U0. The UTO-UCI #6 may be 0011, indicating that CGOs in the slots U1 and U2 are used and CGOs in the slots U3 and U6 are not used. The terminal may transmit UTO-UCI #7 on a CGO in the slot U1. The UTO-UCI #7 may be 0111, indicating that a CGO in the slot U2 is used and CGOs in the slots U3, U6, and U7 are not used. The terminal may transmit UTO-UCI #8 on a CGO in the slot U3. The UTO-UCI #8 may be 1111, indicating that CGOs in the slots U3 and U6 to U8 are not used.

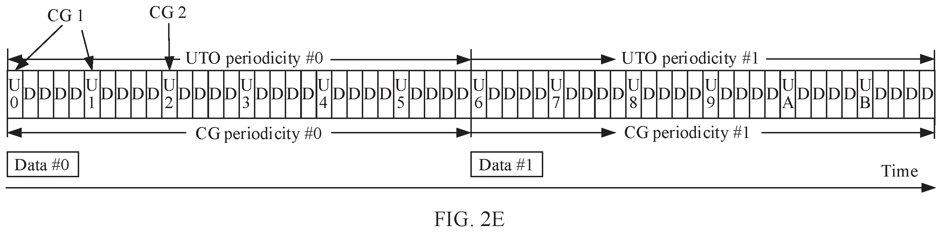

In the relationship 1 to the relationship 4, the N CGOs may belong to one CG, or may belong to a plurality of CGs. For example, in FIG. 2A, the N CGOs corresponding to the UTO-UCI transmitted on the CGO in the slot U0 include CGOs in the slots U0 to U3. The CGOs in the slots U0 to U3 belong to the CG 1. For another example, in FIG. 2E, the N CGOs corresponding to the UTO-UCI transmitted on the CGO in the slot U0 include: CGOs in the slots U0 to U2. The CGOs in the slots U0 and U1 belong to the CG 1, and the CGO in the slot U2 belongs to the CG 2.

Optionally, in the relationship 1 to the relationship 4, the N CGOs are included in a first UTO periodicity. For example, in the relationship 1, the first UTO periodicity may be the first CG periodicity; in the relationship 2, the first UTO periodicity includes the P CG periodicities; in the relationship 3, the first UTO periodicity includes the CGO #b to the CGO #Q; and in the relationship 4, the first UTO periodicity includes the N consecutive valid CGOs after the CGO #a. In this way, the UTO-UCI transmitted on the CGO #a may indicate whether each valid CGO in a UTO periodicity is used.

In some possible manners, the UTO periodicity may be used to determine a range of a CGO indicated in one UTO-UCI, or the UTO-UCI may indicate a quantity of CGOs. Therefore, the UTO periodicity may also be used to determine a size of the UTO-UCI. In this manner, the UTO periodicity may be preconfigured, or may be indicated by using semi-persistent signaling, or may be dynamically indicated. A size of the UTO periodicity may be the same as or different from a size of a valid CG periodicity. For example, the size of the UTO periodicity may be an integer multiple of the size of the CG periodicity. Optionally, when the UTO periodicity is the same as the valid CG periodicity, a start moment of one UTO periodicity is the same as a start moment of the CG periodicity, and an end moment of the UTO periodicity is the same as an end moment of the CG periodicity or an end moment of a last valid CGO in the CG periodicity.

In some other possible manners, the UTO periodicity may be determined based on a size of the UTO-UCI. The size of the UTO-UCI may be indicated by semi-persistent signaling, or may be preconfigured or dynamically indicated.

In some possible manners, if a CGO is indicated as used, the CGO may be modified as unused; or if a CGO is indicated as unused, the CGO cannot be modified as used. For example, in FIG. 2C, the terminal transmits the UTO-UCI #3 on the CGO in the slot U0. The UTO-UCI #3 is 001, indicating that the CGOs in the slots U1 and U2 are used and the CGO in the slot U3 is not used. The terminal may further transmit the UTO-UCI #4 on the CGO in the slot U1. The UTO-UCI #4 cannot indicate that the CGO in the slot U3 is used, but may indicate that the CGO in the slot U2 is not used.

Generally, whether to send the UTO-UCI on the CGO is configured based on semi-persistent information, or may be preconfigured or dynamically indicated. For example, the access network device configures, based on the semi-persistent information (such as RRC signaling), whether UTO-UCI needs to be transmitted in a CG. When a CG is configured to transmit UTO-UCI, the UTO-UCI needs to be sent on each CG PUSCH in the CG. In other words, the UTO-UCI is sent on a CGO corresponding to each CG PUSCH in the CG. The UTO-UCI may be valid for a CG, or may be valid for all CGs configured to transmit the UTO-UCI.

(4) In this application, a unit of time information such as a time period, a length of a CG periodicity, and a time interval may be a time unit. For example, the time unit may be but is not limited to a subframe (subframe), a slot (slot), a symbol, a second (s), a millisecond (ms), a CGO, a valid CGO, or the like. The symbol may be a time domain symbol (for example, an orthogonal frequency division multiplexing (orthogonal frequency division multiplexing, OFDM) symbol) or the like.

(5) In this application, a resource may include a time domain resource and/or a frequency domain resource. For example, the time domain resource may include a resource in a subframe, a slot, or a symbol, and the frequency domain resource may include a resource in a resource block (resource block, RB) or a resource block group (resource block group, RBG). That two resources overlap means that time domain resources of the two resources overlap. Frequency domain resources of the two resources may overlap, or may not overlap.

(6) In this application, a priority of data is a priority of a logical channel to which the data belongs. The priority of the logical channel may be configured by using a semi-persistent message (for example, RRC signaling).

(7) In this application, that a CGO is within a time period means that a time domain resource of the CGO is within the time period, and duration of the time domain resource of the CGO is less than or equal to duration of the time period. That a CGO is not within a time period means that a time domain resource of the CGO is not within the time period.

It should be noted that a granularity, a size, or a unit of data is not limited below in this application. For example, in this application, the unit of the data may be one of the following: a service data unit (service data unit, SDU), a protocol data unit (protocol data unit, PDU), a protocol data unit set (PDU set), or a data burst (data burst). The PDU may include an SDU and a packet header of a layer corresponding to the PDU. For example, a packet data convergence protocol (packet data convergence protocol, PDCP) PDU may include a PDCP SDU and a PDCP packet header. The PDU set includes at least one PDU, and each PDU carries an information element generated by an application (or an application layer). For example, when a data amount of a video frame is large, the data frame may be divided into a plurality of PDUs for transmission, and the PDU set may include the plurality of PDUs. The data burst may be understood as a group of PDUs generated and sent by an application (or an application layer) within a period of time. The group of PDUs may come from one or more PDU sets, and duration of the period of time is less than a specified value.

Currently, the UTO-UCI may be determined based on to-be-transmitted information obtained by the terminal before the UTO-UCI is transmitted. The to-be-transmitted information may include at least one of the following: to-be-transmitted data or a MAC control element (control element, CE). However, jitter (jitter) may occur in uplink data. In this case, time at which the to-be-transmitted data may be obtained by the MAC entity of the terminal may have a deviation, and the deviation may affect data transmission. For example, as shown in FIG. 2F, the CG periodicity #0 includes four valid CGOs: CGOs in slots U0 to U3. The data #0 is data that is not completely transmitted in a previous periodicity of the CG periodicity #0. The MAC entity may determine, based on a data amount of the data #0, to use one valid CGO in the CG periodicity #0 to transmit the data #0. The one valid CGO is, for example, a CGO in the slot U0. The terminal may send UTO-UCI #9 on a CGO in the slot U0. The UTO-UCI #9 may indicate that CGOs in slots U1 to U3 are not used. Due to jitter, the data #1 that should be transmitted in the CG periodicity #0 is obtained by the MAC entity after the slot U0. Because the UTO-UCI #9 has indicated that the CGOs in the slots U1 to U3 are not used, the access network device may have allocated the CGOs in the slots U1 to U3 to another terminal for use. Consequently, the terminal cannot transmit the data #1 in the CG periodicity #0, and a transmission delay of the data #1 is increased. For another example, FIG. 2F is still used as an example. Before a start moment of the slot U0, the MAC entity of the terminal does not obtain to-be-transmitted data that may be transmitted on the four valid CGOs, but the terminal needs to send a MAC CE on the CGO of the slot U0. In this case, the MAC entity may determine to use the CGO of the slot U0 to transmit the MAC CE. The terminal may send UTO-UCI #9 on a CGO in the slot U0. The UTO-UCI #9 may indicate that CGOs in slots U1 to U3 are not used.

In addition, one piece of uplink data may include a plurality of data packets, and the plurality of data packets may be obtained by the MAC entity of the terminal at different time. This may also affect data transmission. For example, as shown in FIG. 2A, the CG periodicity #0 includes four valid CGOs: CGOs in slots U0 to U3. The data #0 includes two data packets: a data packet 1 and a data packet 2. The data packet 1 may be obtained by the MAC entity of the terminal before the slot U0. The MAC entity may determine, based on a data amount of the data packet 1, to use one valid CGO in the CG periodicity #0 to transmit the data packet 1. The one valid CGO is, for example, a CGO in the slot U0. The terminal sends UTO-UCI #10 on a CGO of the slot U0. The UTO-UCI may indicate that CGOs in slots U1 to U3 are not used. The data packet 2 may be obtained by the MAC entity of the terminal between the slot U0 and the slot U1. Because the UTO-UCI #10 has indicated that the CGOs in the slots U1 to U3 are not used, the access network device may have allocated the CGOs in the slots U1 to U3 to another terminal for use. Consequently, the terminal cannot transmit the data packet 2 in the CG periodicity #0, and a transmission delay of the data packet 2 is increased.

In addition, when the relationship between the CGO #a and the N CGOs is the relationship 2 or the relationship 4, if the N CGOs are within at least two CG periodicities, data transmission may also be affected.

For example, as shown in FIG. 2B, the CG periodicity #0 includes four valid CGOs: CGOs in slots U0 to U3. The CG periodicity #1 includes four valid CGOs: CGOs in slots U6 to U9. In the slot U0 or before the slot U0, the data #0 may be obtained by the MAC entity of the terminal. The MAC entity may determine, based on a data amount of the data #0, to use three valid CGOs in the CG periodicity #0 and the CG periodicity #1 to transmit the data #0. The three valid CGOs are, for example, CGOs in slots U0 to U2. The terminal may transmit UTO-UCI #2 on a CGO in the slot U0. The UTO-UCI #2 is 00011111, indicating that CGOs in the slots U0 to U2 are used and CGOs in the slots U3 and U6 to U8 are not used. Because the UTO-UCI #2 has indicated that the valid CGO in the CG periodicity #1 is not used, the access network device may have allocated the valid CGO in the CG periodicity #1 to another terminal for use. Consequently, the terminal cannot transmit data in the CG periodicity #1, and data transmission in the CG periodicity #1 is affected.

For another example, as shown in FIG. 2D, the CG periodicity #0 includes four valid CGOs: CGOs in slots U0 to U3. The CG periodicity #1 includes four valid CGOs: CGOs in slots U6 to U9. N is 4. In the slot U0 or before the slot U0, the data #0 may be obtained by the MAC entity of the terminal. The MAC entity may determine, based on a data amount of the data #0, to use three valid CGOs in the CG periodicity #0 and the CG periodicity #1 to transmit the data #0. The three valid CGOs are, for example, CGOs in slots U0 to U2. The terminal may transmit UTO-UCI #6 on a CGO in the slot U0. The UTO-UCI #6 may be 0011, indicating that CGOs in the slots U1 and U2 are used and CGOs in the slots U3 and U6 are not used. Because the UTO-UCI #6 has indicated that the CGO in the slot U6 in the CG periodicity #1 is not used, the access network device may have allocated the CGO in the slot U6 to another terminal for use. Consequently, the terminal cannot transmit data on the CGO in the slot U6, and data transmission in the CG periodicity #1 is affected.

An embodiment of this application provides a communication method. FIG. 3 is a schematic flowchart corresponding to a communication method according to this application. In FIG. 3, the method is illustrated by using an example in which a first apparatus and a second apparatus are used as execution bodies of interaction illustration. However, the execution bodies of the interaction illustration are not limited in this application. For example, the first apparatus may be a terminal (for example, UE), or may be a module used in the terminal, for example, a chip, a chip system, or a processor, or may be a logical node, a logical module, or software that can implement all or some functions of the terminal. The second apparatus may be an access network device (for example, a RAN), or may be a module used in the access network device, for example, a chip, a chip system, or a processor, or may be a logical node, a logical module, or software that can implement all or some functions of the access network device.

As shown in FIG. 3, the method includes the following steps.

S301: The second apparatus sends first information; and correspondingly, the first apparatus receives the first information.

The first information may indicate a first time period. After receiving the first information, the first apparatus may determine the first time period based on the first information. In some examples, the first information may include a field 1 and a field 2. The field 1 indicates a start moment of the first time period, and the field 2 indicates an end moment of the first time period. For example, if a value of the field 1 is 0 milliseconds (ms), and a value of the field 2 is 5 ms, the first time period may be 0 ms to 5 ms. In some other examples, the information may include a field 1 and a field 3. The field 1 indicates a start moment of the first time period, and the field 3 indicates duration of the first time period. For example, if a value of the field 1 is 0 ms, and a value of the field 3 is 5 ms, the first time period may be 0 ms to 5 ms.

Optionally, the first time period may be semi-persistently configured. For example, the first information indicating the first time period may be carried in RRC signaling. Alternatively, the first time period may be dynamically indicated. For example, the first information is carried in DCI or a MAC CE.

In some possible manners, the first time period may be within a first CG periodicity. The first CG periodicity may be determined by the first apparatus based on third information from the second apparatus. In other words, the third information may be used to determine the first CG periodicity. For example, when the third information indicates that a length of each CG periodicity is 30 ms, a start moment of a 1^{st} CG periodicity in a plurality of CG periodicities is 0 ms, and the first CG periodicity is an n^{th} CG periodicity in the plurality of CG periodicities, the first CG periodicity may range from (0+30*n) ms to (30+30*n) ms, where n is a nonnegative integer. The third information may be sent by the second apparatus after the first CG periodicity is determined. The third information and the first information may be carried in a same message, or may be carried in different messages. This is not limited in this application.

In some examples, the start moment of the first time period is the same as a start moment of the first CG periodicity. For example, the start moment of the first CG periodicity is 0 ms, and the start moment of the first time period is also 0 ms. Optionally, in this example, the first information may not include a field indicating the start moment of the first time period. For example, the first information may include the field 2, and the field 2 indicates the end moment of the first time period. If the start moment of the first CG periodicity is 0 ms, and the value of the field 2 is 5 ms, the first time period may be 0 ms to 5 ms. For another example, the first information may include the field 3, and the field 3 indicates the duration of the first time period. If the start moment of the first CG periodicity is 0 ms, and the value of the field 3 is 6 ms, the first time period may be 0 ms to 5 ms.

In some examples, an interval between the start moment of the first time period and the start moment of the first CG periodicity is a first time interval. For example, if the start moment of the first CG periodicity is 0 ms, and the first time interval is 2 ms, the start moment of the first time period is 2 ms. It should be understood that a start moment of the first time interval is the same as the start moment of the first CG periodicity. The first time interval may be preset, or may be obtained by the first apparatus from the second apparatus. For example, the second apparatus may indicate the first time interval to the first apparatus by using RRC signaling, DCI, or a MAC CE. This is not limited in this application.

Optionally, when the first time interval may be preset, the first information may not include a field indicating the start moment of the first time period. For example, the first time interval is 2 ms. The first information may include the field 2, and the field 2 indicates the end moment of the first time period. If the start moment of the first CG periodicity is 0 ms, and the value of the field 2 is 6 ms, the first time period may be 2 ms to 6 ms. For another example, the first time interval is 2 ms. The first information may include the field 3, and the field 3 indicates the duration of the first time period. If the start moment of the first CG periodicity is 0 ms, and the value of the field 3 is 5 ms, the first time period may be 2 ms to 7 ms.

Optionally, when the first time interval may be obtained by the first apparatus from the second apparatus, the first information may include a field 4, and the field 4 indicates the first time interval. For example, the first information may include the field 2 and the field 4, and the field 2 indicates the end moment of the first time period. If the start moment of the first CG periodicity is 0 ms, the value of the field 2 is 6 ms, and a value of the field 4 is 2 ms, the first time period may be 2 ms to 6 ms. For another example, the first information may include the field 3 and the field 4, and the field 3 indicates the duration of the first time period. If the start moment of the first CG periodicity is 0 ms, the value of the field 3 is 5 ms, and the value of the field 4 is 2 ms, the first time period may be 2 ms to 7 ms.

In some possible manners, the first time period may be determined by the second apparatus based on jitter information of first data. The jitter information of the first data is, for example, a range of time at which the first data may be obtained by a MAC entity of the first apparatus. The range may also be referred to as a time offset range, and the time offset range may be a time offset range between an actual obtaining moment of the first data and an expected obtaining moment of the first data. The expected obtaining moment of the first data is determined based on a periodicity of the first data. The periodicity of the first data may be determined by the second apparatus, for example, may be determined by the second apparatus based on time-sensitive communication assistance information (time-sensitive communication assistance information, TSCAI).

For example, the second apparatus determines the first time period based on the first CG periodicity and the jitter information of the first data. For example, the jitter information includes [-4 ms, 4 ms]. The second apparatus may determine that the start moment of the first time period is the same as the start moment of the first CG periodicity, and the duration of the first time period is 5 ms.

Optionally, the jitter information may be sent by the first apparatus to the second apparatus. For example, the first apparatus may send user assistance information (user assistance information, UAI) to the second apparatus, where the UAI includes the jitter information. The first apparatus may periodically send the jitter information to the second apparatus, or may send the jitter information to the second apparatus based on a request of the second apparatus. This is not limited in this application. Optionally, the second apparatus may further adjust uplink transmission based on the jitter information, for example, adjust a start moment of a CG, and delay or advance the start moment of the CG, so that each CG periodicity can better match a service periodicity, to reduce an uplink resource waste.

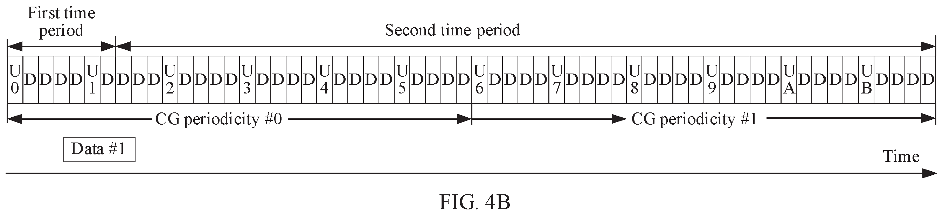

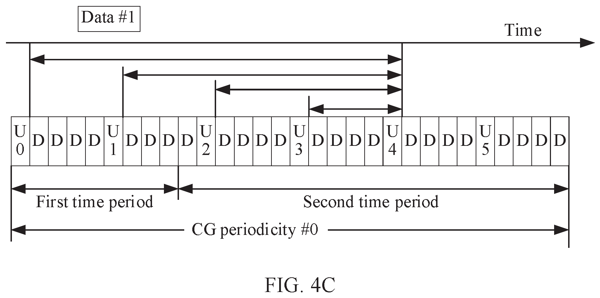

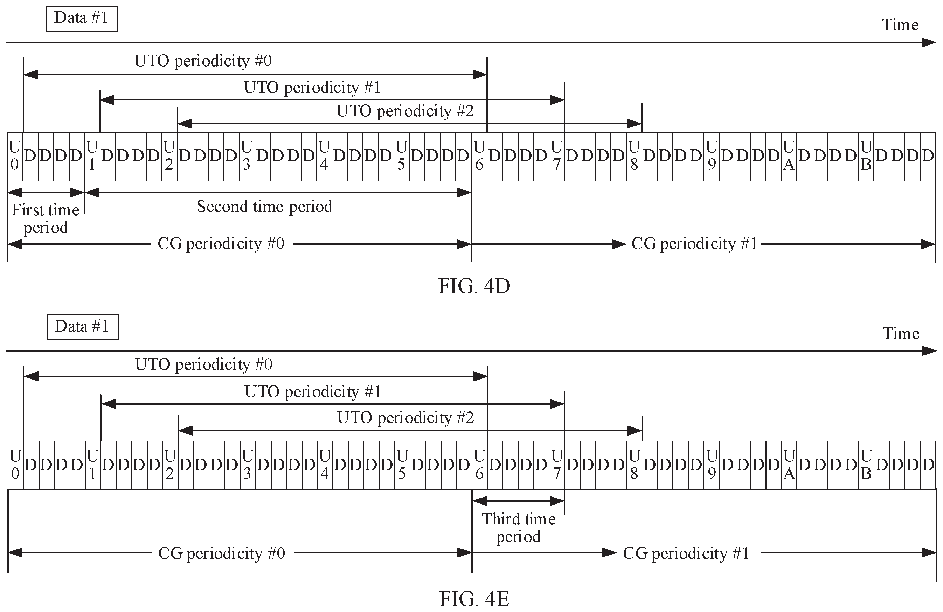

Optionally, the first time period may be periodic. In some examples, a periodicity of the first time period may be the same as a length of the CG periodicity. For example, a first time period exists in each CG periodicity of one CG. For example, as shown in FIG. 4A or FIG. 4C, a first time period exists in a CG periodicity #0. If another CG periodicity other than the CG periodicity #0 still exists, a first time period exists in each CG periodicity of the another CG periodicity. For another example, as shown in FIG. 4D, a first time period exists in the CG periodicity #0. A first time period also exists in a CG periodicity #1. In some other examples, a periodicity of the first time period may be different from a length of the CG periodicity. For example, the periodicity of the first time period is an integer multiple of the length of the CG periodicity. For example, the periodicity of the first time period is twice the length of the CG periodicity. As shown in FIG. 4B, a first time period exists in the CG periodicity #0. If a CG periodicity #2 is after the CG periodicity #1 and adjacent to the CG periodicity #1, a first time period also exists in the CG periodicity #2.

S302: The first apparatus sends first indication information on a first CGO; and correspondingly, the second apparatus receives the first indication information on the first CGO.

The first CGO is not within the first time period. The first indication information may indicate whether each of N CGOs is used, and N is a positive integer. For example, the first indication information may be UTO-UCI.

The first indication information may be determined based on a data amount of the first data. In other words, when a sending moment of the first indication information or the first CGO is not within the first time period, the MAC entity of the first apparatus may determine, based on the data amount of the first data, content of the first indication information, or determine, based on the data amount of the first data, how the first indication information indicates whether each of the N CGOs is available. Whether a part or all of the N CGOs are used is determined based on the data amount of the first data. The first data is obtained by the first apparatus before a start moment of the first CGO. In other words, the first data is to-be-sent data of the first apparatus at the start moment of the first CGO. Optionally, the first data is data that may be transmitted on the first CGO. For example, if an LCH to which the first data belongs is bound to a CG to which the first CGO belongs, the first data is data that may be transmitted on the first CGO.

In some possible manners, the N CGOs include the first CGO. A start moment of the N CGOs may be a start moment of a fourth CGO, and the fourth CGO is a 1^{st} valid CGO in the first CG periodicity. For example, the first CG periodicity includes four valid CGOs: CGOs in slots U0 to U3; and the first time period includes a slot U0. The first CGO may be a CGO in one of the slots U1 to U3, the N CGOs include CGOs in the slots U0 to U3, and the start moment of the N CGOs is a start moment of a CGO in the slot U0. For another example, the first CG periodicity includes four valid CGOs: CGOs in slots U0 to U3; a second CG periodicity includes four valid CGOs: CGOs in slots U6 to U9; and the first time period includes a slot U0. The first CGO may be a CGO in one of the slots U1 to U3 and U6 to U9, the N CGOs include CGOs in the slots U0 to U3 and U6 to U9, and the start moment of the N CGOs is a start moment of a CGO in the slot U0.

Optionally, in this manner, a relationship between the first CGO and the N CGOs may be a relationship 1 or a relationship 2. With reference to the relationship 1 and the relationship 2, the following separately uses an example to describe how the first indication information sent on the first CGO indicates whether the N CGOs are used. In the following example, data #2 may include at least one of the following: data #1 or data #0. The data #1 may be data obtained by the MAC entity of the first apparatus between the slots U0 and U1 due to jitter. The data #0 is to-be-transmitted data before the data #1 may be obtained by the MAC entity, for example, partial data of to-be-transmitted data in the CG periodicity #0. The data #2 may be transmitted on a part or all of the N CGOs. For example, if the N CGOs are CGOs of a CG 1, the data #2 is data of an LCH #1, and the data of the LCH #1 may be transmitted in the CG 1 (for example, the CG 1 is bound to the LCH #1), a part or all of the N CGOs may be used to transmit the data #2. The data #2 may also be understood as data in an LCH that may be obtained by the MAC entity at a moment and that may be transmitted in the CG corresponding to the N CGOs. The data #2 may be a part or all of data of one or more SDUs, for example, a remaining part of one or more SDUs after transmission.

In some examples, the relationship between the first CGO and the N CGOs is the relationship 1, and the N CGOs are within the first CG periodicity.

For example (referred to as an example a below), as shown in FIG. 4A, the first CG periodicity is the CG periodicity #0. The CG periodicity #0 includes five valid CGOs: CGOs in slots U0 to U4. The first time period includes slots U0 and U1, and CGOs in slots U2 to U4 are not within the first time period. If the first apparatus sends information on a CGO in any one of the slots U2 to U4, the CGO may be the first CGO. Before the slot U2, to-be-transmitted data obtained by the MAC entity of the first apparatus includes the data #2. The MAC entity may determine, based on a data amount of the data #2, to use two valid CGOs to transmit the data #2, where the two valid CGOs are, for example, CGOs in slots U2 and U3. The first apparatus sends first indication information #1 on a CGO in the slot U2. The first indication information #1 may include 001, indicating that the CGOs in the slots U2 and U3 are used and a CGO in the slot U4 is not used. The first apparatus may further send the first indication information #1 on the CGO in the slot U3.

Optionally, the first indication information #1 further includes information indicating whether CGOs in the slots U0 and U1 are used. In the first indication information #1, there may be a plurality of implementations of the information indicating whether the CGOs in the slots U0 and U1 are used, for example, an implementation 1, an implementation 2, or an implementation 3.

Implementation 1: In the first indication information #1, the information indicating whether the CGOs in the slots U0 and U1 are used may be determined based on first UTO-UCI, and the first UTO-UCI may be sent on a CGO in a slot before the slot U2. For example, the first UTO-UCI is UTO-UCI sent on a CGO in the slot U0 and/or the slot U1. The information indicating whether the CGOs in the slots U0 and U1 are used in the first indication information #1 sent in the slot U2 may be the same as information indicating whether the CGOs in the slots U0 and U1 are used in the first UTO-UCI. In other words, the first indication information #1 sent in the slot U2 may not change an indication result of the CGOs in the slots U0 and U1. For example, the first UTO-UCI is UTO-UCI sent on a CGO in the slot U0. If in the first UTO-UCI, the CGO in the slot U0 is indicated as unused, and the CGO in the slot U1 is indicated as used, the first indication information #1 may be 10001, indicating that the CGOs in the slots U1 to U3 are used, and the CGOs in the slots U0 and U4 are not used.

Implementation 2: In the first indication information #1, the information indicating whether the CGOs in the slots U0 and U1 are used may be determined based on actual usage of the CGOs in the slots U0 and U1. For example, if the CGO in the slot U0 is not used, and the CGO in the slot U1 is used, the first indication information #1 may be 10001, indicating that the CGOs in the slots U1 to U3 are used and the CGOs in the slots U0 and U4 are not used.

Implementation 3: In the first indication information #1, the information indicating whether the CGOs in the slots U0 and U1 are used may not be determined based on the first UTO-UCI, and the first UTO-UCI may be sent on a CGO in a slot before the slot U2. In this case, the first indication information #1 sent in the slot U2 may change an indication result of the CGOs in the slots U0 and U1. For example, the first UTO-UCI is UTO-UCI transmitted on a CGO in the slot U0. In the first UTO-UCI, the CGO in the slot U0 is indicated as unused, and the CGO in the slot U1 is indicated as used. The first indication information #1 may indicate that the CGOs in the slots U0 to U3 are used and the CGO in the slot U4 is not used. Because the slots U0 and U1 have elapsed, a result of indicating the CGOs in the slots U0 and U1 by the first indication information #1 does not affect use of the CGOs in the slots U0 and U1.

For another example, the first time period in FIG. 4A may be shortened, a shortened first time period includes a slot U0, and CGOs in slots U1 to U4 are not within the first time period. If the first apparatus sends information on a CGO in any one of the slots U1 to U4, the CGO may be the first CGO. Before the slot U1, to-be-transmitted data obtained by the MAC entity of the first apparatus includes the data #2. The MAC entity may determine, based on a data amount of the data #2, to use three valid CGOs to transmit the data #2. The three valid CGOs are, for example, CGOs in slots U1 to U3. The first apparatus sends first indication information #1 on a CGO in the slot U1. The first indication information #1 may include 0001, indicating that the CGOs in the slots U1 to U3 are used and a CGO in the slot U4 is not used. The first apparatus may further separately send the first indication information #1 on CGOs in the slots U2 and U3. Optionally, the first indication information #1 further includes information indicating whether the CGO in the slot U0 is used. For specific content of the information indicating whether the CGO in the slot U0 is used, refer to the descriptions of the information indicating whether the CGOs in the slots U0 and U1 are used in the example a. The only difference is that the slots U0 and U1 are replaced with the slot U0. Details are not described herein again.

In some other examples, the relationship between the first CGO and the N CGOs may be the relationship 2, and the N CGOs are within the P CG periodicities. For example, as shown in FIG. 4B, the P CG periodicities include a CG periodicity #0 and a CG periodicity #1. The CG periodicity #0 includes five valid CGOs: CGOs in slots U0 to U4; and the CG periodicity #1 includes five valid CGOs: CGOs in slots U6 to UA. The first time period includes slots U0 and U1, and CGOs in slots U2 to U4 are not within the first time period. If the first apparatus sends information on a CGO in any one of the slots U2 to U4, the CGO may be the first CGO. Before the slot U2, to-be-transmitted data obtained by the MAC entity of the first apparatus includes the data #2. The MAC entity may determine, based on a data amount of the data #2, to use two valid CGOs to transmit the data #2. The two valid CGOs are, for example, CGOs in slots U2 and U3. The first apparatus may send first indication information #2 on a CGO in the slot U2. The first indication information #2 may include 00111111, indicating that the CGOs in the slots U2 and U3 are used and CGOs in slots U4 and U6 to UA are not used. The first apparatus may further send the first indication information #2 on the CGO in the slot U3.

Optionally, the first indication information #2 further includes information indicating whether the CGOs in the slots U0 and U1 are used. For details, refer to the descriptions in the example a. Details are not described again. For example, if the CGOs in the slots U0 and U1 are indicated as used, the first indication information #2 may be, for example, 0000111111, indicating that CGOs in slots U0 to U3 are used and CGOs in slots U4 and U6 to UA are not used. For another example, if the CGO in the slot U0 is indicated as unused, and the CGO in the slot U1 is indicated as used, the first indication information #2 may be 1000111111, indicating that CGOs in slots U1 to U3 are used and CGOs in slots U0, U4, and U6 to UA are not used.

In some other possible manners, the start moment of the N CGOs is later than the end moment of the first CGO. In other words, the first indication information transmitted on the first CGO may indicate whether each of the N CGOs after the first CGO is used. In some examples, the start moment of the N CGOs may be the same as the end moment of the first CGO. For example, the end moment of the first CGO is 6 ms, and the start moment of the N CGOs is also 6 ms. In some other examples, a time interval between the start moment of the N CGOs and the end moment of the first CGO is a third time interval. For example, if the end moment of the first CGO is 6 ms, and the third time interval is 5 ms, the start moment of the N CGOs is 11 ms. The third time interval may be preset, or may be determined by the first apparatus based on fourth information from the second apparatus. The fourth information indicates the third time interval. This is not limited in this application. The fourth information and the first information may be carried in a same message, or may be carried in different messages. This is not limited in this application.

Optionally, in this manner, the relationship between the first CGO and the N CGOs may be the foregoing relationship 3 or relationship 4. With reference to the relationship 3 and the relationship 4, the following separately uses an example to describe how the first indication information sent on the first CGO indicates whether the N CGOs are used.

For example, the relationship between the first CGO and the N CGOs is the relationship 3. As shown in FIG. 4C, the first CG periodicity is a CG periodicity #0. In this example, the third time interval does not exist, or a value of the third time interval is 0. The CG periodicity #0 includes five valid CGOs: CGOs in slots U0 to U4. The first time period includes slots U0 and U1, and CGOs in slots U2 to U4 are not within the first time period. If the first apparatus sends information on a CGO in any one of the slots U2 to U4, the CGO may be the first CGO. Before the slot U2, to-be-transmitted data obtained by the MAC entity of the first apparatus includes the data #2. The MAC entity may determine, based on a data amount of the data #2, to use two valid CGOs to transmit the data #2. The two valid CGOs are, for example, CGOs in slots U2 and U3. The first apparatus sends first indication information #3 on a CGO in the slot U2. The first indication information #3 may be 01, indicating that a CGO in the slot U3 is used and a CGO in the slot U4 is not used. Alternatively, the first apparatus may send first indication information #7 on the CGO in the slot U3. The first indication information #7 may be 1, indicating that the CGO in the slot U4 is not used.

For another example, the relationship between the first CGO and the N CGOs may be the relationship 4. As shown in FIG. 4D, a CG periodicity #0 includes four valid CGOs: CGOs in slots U0 to U3; and a CG periodicity #1 includes four valid CGOs: CGOs in slots U6 to U9. The first time period includes a slot U0, and CGOs in slots U1 to U4 are not within the first time period. If the first apparatus sends information on a CGO in any one of the slots U1 to U4, the CGO may be the first CGO. Before the slot U1, to-be-transmitted data obtained by the MAC entity of the first apparatus includes the data #2. The MAC entity may determine, based on a data amount of the data #2, to use three valid CGOs to transmit the data #2. The three valid CGOs are, for example, CGOs in slots U1 to U3. The first apparatus sends first indication information #4 on a CGO in the slot U1. The first indication information #4 may be 001, indicating that CGOs in the slots U2 and U3 are used and a CGO in the slot U6 is not used. In the slot U2 or before the slot U2, the MAC entity may determine, based on a remaining data amount of the data #2, that one valid CGO after the slot U2 further needs to be used to transmit remaining data of the data #2, where the one valid CGO is, for example, a CGO in the slot U3. The first apparatus sends first indication information #5 on a CGO in the slot U2. The first indication information #5 may be 011, indicating that a CGO in the slot U3 is used and CGOs in the slots U6 and U7 are not used. In the slot U3 or before the slot U3, the MAC entity may determine, based on a remaining data amount of the data #2, that there is no need to use a valid CGO after the slot U3 to transmit remaining data of the data #2. The first apparatus sends first indication information #6 on a CGO in the slot U3. The first indication information #6 may be 111, indicating that CGOs in the slots U6 to U8 are not used.

Optionally, in the examples shown in FIG. 4A to FIG. 4D, the data #2 may alternatively be replaced with one or more data packets in uplink data. For example, the uplink data includes a data packet 1 and a data packet 2. In the example shown in FIG. 4A, the data packet 1 is obtained by the MAC entity of the first apparatus before the slot U0, and the data packet 2 is obtained by the MAC entity between the slots U0 and U1. If the first apparatus sends information on a CGO in either of the slots U2 and U3, the first indication information transmitted on the CGO is determined based on a data amount of the data packet 2.

It should be understood that when the relationship between the first CGO and the N CGOs is any one of the relationship 1 to the relationship 4, the N CGOs may belong to one CG, or may belong to a plurality of CGs. For example, in FIG. 4A, the N CGOs include CGOs in the slots U0 to U4. The CGOs in the slots U0 to U4 belong to the CG 1. For another example, in FIG. 4E, the N CGOs include CGOs in the slots U0 to U2. The CGOs in the slots U0 and U1 belong to the CG 1, and the CGO in the slot U2 belongs to the CG 2.

It should be further understood that the relationship between the first CGO and the N CGOs is one of the relationship 1 to the relationship 4, which may be preset, or may be configured by the second apparatus for the first apparatus. For example, the second apparatus sends second information to the first apparatus, where the second information may indicate the relationship between the first CGO and the N CGOs. In this way, the first apparatus may determine the relationship between the first CGO and the N CGOs based on the second information, and determine N.

Optionally, in the method shown in FIG. 3, the first time period may be periodic. For example, each CG periodicity includes the first time period. In this case, the relationship between the first CGO and the N CGOs may be the foregoing relationship 1, relationship 3, or relationship 4. In this case, when the first time interval exists, each CG periodicity includes the first time interval. For descriptions of each first time interval and the CG periodicity including the first time interval, refer to the foregoing descriptions. Details are not described herein again. For another example, every P CG periodicities include one first time period. In this case, the relationship between the first CGO and the N CGOs may be the foregoing relationship 2. In addition, the first time period may be associated with a CG configuration, or in other words, the first time period is configured together with a CG configuration. In this case, the first time period may appear in a CG periodicity of the associated CG configuration.

According to the method shown in FIG. 3, the first information received by the first apparatus may indicate the first time period. When the first apparatus sends the first indication information on the first CGO outside the first time period, the first indication information may be determined based on data obtained before the start moment of the first CGO, so that content of the first indication information can be accurately determined, and whether the N CGOs are used can be accurately notified.

In some possible manners, the method shown in FIG. 3 further includes the following step.

S303: The first apparatus sends second indication information on a second CGO; and correspondingly, the second apparatus receives the second indication information on the second CGO.

The second CGO is within the first time period. For example, the first time period includes the slot U0, and the second CGO may be a CGO in the slot U0. The second indication information may indicate that M CGOs are used, and M is a positive integer. The M CGOs may include a part or all of the N CGOs. M may be the same as or different from N. For a relationship between the second CGO and the M CGOs, refer to the descriptions of the relationship between the first CGO and the N CGOs in S302. The only difference is that the first CGO is replaced with the second CGO, and the N CGOs are replaced with the M CGOs. Details are not described herein again. The second indication information is not determined based on a data amount of to-be-transmitted data. For example, the second indication information is not determined based on the data amount of the first data.

The following uses an example to describe how the second indication information sent on the second CGO indicates that the M CGOs are used.

In some examples (an example b for short below), the relationship between the second CGO and the M CGOs may be the relationship 1, and the M CGOs are within the first CG periodicity. FIG. 4A is still used as an example. The first CG periodicity is a CG periodicity #0. The CG periodicity #0 includes five valid CGOs: CGOs in slots U0 to U4. The first time period includes slots U0 and U1. In other words, the CGOs in the slots U0 and U1 are within the first time period. If the first apparatus sends information on a CGO in either of the slots U0 and U1, the CGO may be the second CGO. In the CG periodicity #0, the to-be-transmitted data of the MAC entity of the first apparatus includes the data #2. For specific content of the data #2, refer to S302. In this example, the first apparatus may not determine, based on the data amount of the data #2, content of the second indication information transmitted on the CGOs in the slots U0 and U1. For example, for the second indication information transmitted on the CGOs in the slots U0 and U1, the MAC entity may determine that the M CGOs are used, but a basis for determining that the M CGOs are used may not be the data amount of the data #2. Alternatively, the MAC entity may not determine content of the second indication information transmitted on the CGOs in the slots U0 and U1, and a physical layer of the first apparatus determines the content of the second indication information transmitted on the CGOs in the slots U0 and U1. For example, the first apparatus sends second indication information #1 on the CGO in the slot U0. Preferably, the second indication information #1 may be 00000, indicating that the CGOs in the slots U0 to U4 are used. The first apparatus may further send the second indication information #1 on the CGO in the slot U1.

In some other examples, the relationship between the second CGO and the M CGOs may be the relationship 2, and the M CGOs are within the P CG periodicities. FIG. 4B is still used as an example. The P CG periodicities include a CG periodicity #0 and a CG periodicity #1. The CG periodicity #0 includes five valid CGOs: CGOs in slots U0 to U4; and the CG periodicity #1 includes five valid CGOs: CGOs in slots U6 to UA. The first time period includes slots U0 and U1. In other words, the CGOs in the slots U0 and U1 are within the first time period. If the first apparatus sends information on a CGO in either of the slots U0 and U1, the CGO may be the second CGO. In the P CG periodicities, the to-be-transmitted data of the MAC entity of the first apparatus includes the data #2. For specific content of the data #2, refer to S302. The first apparatus may not determine, based on the data amount of the data #2, content of the second indication information transmitted on the CGOs in the slots U0 and U1. For a manner in which the first apparatus determines the content of the second indication information transmitted on the CGOs in the slots U0 and U1, refer to the example b. Details are not described herein again. The first apparatus sends second indication information #2 on the CGO in the slot U0. Preferably, the second indication information #2 may be 0000000000, indicating that the CGOs in the slots U0 to U4 and U6 to UA are used. The first apparatus may further send the second indication information #2 on the CGO in the slot U1.

In still some other examples, the relationship between the second CGO and the M CGOs may be the relationship 3. FIG. 4C is still used as an example. The first CG periodicity is a CG periodicity #0. The CG periodicity #0 includes five valid CGOs: CGOs in slots U0 to U4. The first time period includes slots U0 and U1. In other words, the CGOs in the slots U0 and U1 are within the first time period. If the first apparatus sends information on a CGO in either of the slots U0 and U1, the CGO may be the second CGO. In the CG periodicity #0, the to-be-transmitted data of the MAC entity of the first apparatus includes the data #2. For specific content of the data #2, refer to S302. The first apparatus may not determine, based on the data amount of the data #2, content of the second indication information transmitted on the CGOs in the slots U0 and U1. For a manner in which the first apparatus determines the content of the second indication information transmitted on the CGOs in the slots U0 and U1, refer to the example b. Details are not described herein again. The first apparatus sends second indication information #3 on the CGO in the slot U0. The second indication information #3 may be 0000, indicating that the CGOs in the slots U1 to U4 are used. The first apparatus further sends second indication information #4 on the CGO in the slot U1. The second indication information #4 may be 000, indicating that the CGOs in the slots U2 to U4 are used.

In still some other examples, the relationship between the second CGO and the M CGOs may be the relationship 4. FIG. 4D is still used as an example. A CG periodicity #0 includes four valid CGOs: CGOs in slots U0 to U3; and a CG periodicity #1 includes four valid CGOs: CGOs in slots U6 to U9. The first time period includes a slot U0. In other words, a CGO in the slot U0 is within the first time period. If the first apparatus sends information on the CGO in the slot U0, the CGO may be the second CGO. In the CG periodicity #0, the to-be-transmitted data of the MAC entity of the first apparatus includes the data #2. For specific content of the data #2, refer to S302. The first apparatus may not determine, based on the data amount of the data #2, content of the second indication information transmitted on the CGO in the slot U0. For a manner in which the first apparatus determines the content of the second indication information transmitted on the CGO in the slot U0, refer to the example b. Details are not described herein again. The first apparatus sends second indication information #5 on the CGO in the slot U0. The second indication information #5 may be 0000, indicating that the CGOs in the slots U1 to U3 and U6 are used.

The relationship between the second CGO and the M CGOs is one of the relationship 1 to the relationship 4, which may be preset, or may be configured by the second apparatus for the first apparatus. For example, the second apparatus sends second information to the first apparatus, where the second information may indicate the relationship between the second CGO and the M CGOs. In this way, the first apparatus may determine the relationship between the second CGO and the M CGOs based on the second information, and determine M.

According to the method, when the second indication information is sent on the second CGO in the first time period, the second indication information is not determined based on the data amount of the to-be-transmitted data, and may indicate that the M CGOs are used. Therefore, the first apparatus does not determine, based on an incorrect data amount, whether a CGO is used, to avoid affecting data transmission and reduce the data transmission delay. For example, when uplink data is delayed in being obtained by the MAC entity of the first apparatus due to jitter, or a part of data packets in the uplink data are delayed in being obtained by the MAC entity of the first apparatus, the first apparatus does not determine, in the first time period based on the data amount of the to-be-transmitted data, whether the CGO is used, and therefore does not report, to an access network device, that a part or all of the M CGOs are not used, where the part or all of the M CGOs may be used to transmit the uplink data or the part of data packets in the uplink data delayed in being obtained by the MAC entity, to avoid affecting data transmission and reduce the data transmission delay.

In some other possible manners, the first apparatus does not send, on the second CGO, third indication information indicating whether the M CGOs are used. The third indication information is, for example, UTO-UCI. For specific content of the second CGO and the M CGOs, refer to S303. Details are not described herein again. For example, FIG. 4A, FIG. 4B, or FIG. 4C is still used as an example. The first time period includes slots U0 and U1, and the first apparatus does not send the UTO-UCI on CGOs in the slots U0 and U1. For another example, FIG. 4D is still used as an example. The first time period includes a slot U0, and the first apparatus does not send the UTO-UCI on a CGO in the slot U0.

According to the method, the first apparatus does not send, on the second CGO, the third indication information indicating whether the M CGOs are used. Therefore, the first apparatus does not determine, based on an incorrect data amount, whether a CGO is used, to avoid affecting data transmission and reduce a data transmission delay. For example, when uplink data is delayed in being obtained by the MAC entity of the first apparatus due to jitter, or a part of data packets in the uplink data are delayed in being obtained by the MAC entity of the first apparatus, the first apparatus does not determine, in the first time period based on the data amount of the to-be-transmitted data, whether the CGO is used, and therefore does not report, to an access network device, that a part or all of the M CGOs are not used, where the part or all of the M CGOs may be used to transmit the uplink data or the part of data packets in the uplink data delayed in being obtained by the MAC entity, to avoid affecting data transmission and reduce the data transmission delay.

In some possible manners, before S302, the method shown in FIG. 3 further includes step A1.

A1: The first apparatus determines a second time period, where the first CGO is within the second time period.

The following first describes the second time period.

The second time period may be within the first CG periodicity. The first CG periodicity may be determined by the first apparatus based on third information from the second apparatus. In other words, the third information may be used to determine the first CG periodicity. For specific content of the third information, refer to the descriptions of the third information in S301. Details are not described herein again.

An interval between a start moment of the second time period and the start moment of the first CG periodicity may be a second time interval. For example, if the start moment of the first CG periodicity is 0 ms, and the second time interval is 8 ms, the start moment of the second time period is 8 ms. The second time interval may be preset, or may be obtained by the first apparatus from the second apparatus. For example, the second apparatus may indicate the second time interval to the first apparatus by using RRC signaling, DCI, or a MAC CE. This is not limited in this application.

Optionally, the second time interval is the same as duration of the first time period. For example, if the duration of the first time period is 8 ms, the second time interval is also 8 ms.

In some examples, an end moment of the second time period may be the end moment of the first CG periodicity. For example, the end moment of the first CG periodicity is 30 ms, and the end moment of the second time period is also 30 ms. In some other examples, the end moment of the second time period is an end moment of a third CGO, and the third CGO is a last CGO or a last valid CGO in the first CG periodicity. For example, the first CG periodicity is a CG periodicity #0, and the CG periodicity #0 includes four valid CGOs: CGOs in slots U0 to U3. The end moment of the second time period is an end moment of a CGO in the slot U3. For another example, the first CG periodicity is a CG periodicity #0, and the CG periodicity #0 includes six CGOs: CGOs in slots U0 to U5. The end moment of the second time period is an end moment of a CGO in the slot U5.

The following describes the second time period by using an example with reference to FIG. 4A to FIG. 4D.

FIG. 4A is still used as an example. The first CG periodicity is a CG periodicity #0. The CG periodicity #0 includes five valid CGOs: CGOs in slots U0 to U4. An interval between the start moment of the second time period and a start moment of the CG periodicity #0 is a second time interval, and the second time interval is duration of the first time period. The end moment of the second time period is an end moment of the CG periodicity #0; or the end moment of the second time period is an end moment of a CGO in the slot U4; or the end moment of the second time period is an end moment of a CGO in the slot U5.

FIG. 4B is still used as an example. The P CG periodicities include a CG periodicity #0 and a CG periodicity #1. The CG periodicity #0 includes four valid CGOs: CGOs in slots U0 to U3; and the CG periodicity #1 includes four valid CGOs: CGOs in slots U6 to U9. An interval between the start moment of the second time period and a start moment of the CG periodicity #0 is a second time interval. The second time interval is duration of the first time period. The end moment of the second time period may be an end moment of the CG periodicity #1; or the end moment of the second time period is an end moment of a CGO in the slot U9; or the end moment of the second time period is an end moment of a CGO in a slot UB.

FIG. 4C is still used as an example. The first CG periodicity is a CG periodicity #0. The CG periodicity #0 includes four valid CGOs: CGOs in slots U0 to U3. An interval between the start moment of the second time period and a start moment of the CG periodicity #0 is a second time interval. The second time interval is duration of the first time period. The end moment of the second time period is an end moment of the CG periodicity #0; or the end moment of the second time period is an end moment of a CGO in the slot U3; or the end moment of the second time period is an end moment of a CGO in the slot U5.

FIG. 4D is still used as an example. The first CG periodicity is a CG periodicity #0. The CG periodicity #0 includes four valid CGOs: CGOs in slots U0 to U3. An interval between the start moment of the second time period and a start moment of the CG periodicity #0 is a second time interval. The second time interval is duration of the first time period. The end moment of the second time period is an end moment of the CG periodicity #0; or the end moment of the second time period is an end moment of a CGO in the slot U3; or the end moment of the second time period is an end moment of a CGO in the slot U5.

Optionally, the second time period may be periodic. For a periodicity of the second time period, refer to the descriptions of the periodicity of the first time period in S301. The only difference is that the first time period is replaced with the second time period. Details are not described herein again. The periodicity of the second time period may be the same as or different from the periodicity of the first time period.

Optionally, in step A1, the first apparatus may determine the second time period in a plurality of manners, for example, a manner a1 or a manner a2.

Manner a1: The first apparatus determines the second time period based on information #1 from the second apparatus.

The information #1 may indicate the second time period. For specific content of indicating the second time period by the information #1, refer to the descriptions of indicating the first time period by the first information in S301. The only difference is that the first information is replaced with the information #1, and the first time period is replaced with the second time period. Details are not described herein again.

In some possible manners, when the interval between the start moment of the second time period and the start moment of the first CG periodicity is the second time interval, the information #1 may not include a field indicating the start moment of the second time period. In some examples, the information #1 includes a field 5 and a field 6. The field 5 indicates the end moment of the second time period, and the field 6 indicates the second time interval. For example, if a value of the field 5 is 30 ms, a value of the field 6 is 8 ms, and the start moment of the first CG periodicity is 0 ms, the second time period is 8 ms to 30 ms. In some other examples, the information #1 includes a field 6 and a field 7. The field 6 indicates the second time interval, and the field 7 indicates duration of the second time period. For example, if a value of the field 6 is 8 ms, a value of the field 7 is 22 ms, and the start moment of the first CG periodicity is 0 ms, the second time period is 8 ms to 30 ms. In still some other examples, the end moment of the second time period is the same as the end moment of the first CG periodicity, and the information #1 may not include a field indicating the end moment of the second time period. The information #1 includes a field 6, and the field 6 indicates the second time interval. For example, if a value of the field 6 is 8 ms, the start moment of the first CG periodicity is 0 ms, and the end moment of the first CG periodicity is 30 ms, the second time period is 8 ms to 30 ms. In still some other examples, the second time interval is preset. The information #1 may not include a field #6. For example, if the information #1 includes a field 5, the field 5 indicates the end moment of the second time period, a value of the field 5 is 30 ms, the second time interval is 8 ms, and the start moment of the first CG periodicity is 0 ms, the second time period is 8 ms to 30 ms. For another example, if the information #1 includes a field 7, the field 7 indicates the duration of the second time period, a value of the field 7 is 22 ms, the second time interval is 8 ms, and the start moment of the first CG periodicity is 0 ms, the second time period is 8 ms to 30 ms.

For example, the second time period may be semi-persistently configured. For example, the information #1 indicating the second time period may be carried in RRC signaling. Alternatively, the second time period may be dynamically indicated. For example, the information #1 is carried in DCI or a MAC CE.

Optionally, the second time period may be determined by the second apparatus based on the jitter information of the first data. The jitter information of the first data is, for example, a range of time at which the first data is obtained by the MAC entity of the first apparatus. For example, the range includes [-4 ms, 4 ms], the first CG periodicity is 0 ms to 29 ms, the second apparatus may determine that the interval between the start moment of the second time period and the start moment of the first CG periodicity is the second time interval, and the second time interval is 5 ms. The end moment of the second time period is the end moment of the first CG periodicity; or the end moment of the second time period is the end moment of the last CGO or the last valid CGO in the first CG periodicity. The jitter information may be sent by the first apparatus to the second apparatus. For specific content, refer to S301. Details are not described herein again.

Manner a2: The first apparatus determines the second time period based on the jitter information of the first data. For specific content of determining the second time period by the first apparatus based on the jitter information of the first data, refer to the descriptions of determining the second time period by the second apparatus based on the jitter information of the first data in the manner a1. Details are not described herein again.

Optionally, in step A1, the first CG periodicity may be replaced with a first UTO periodicity. For specific content of the first UTO periodicity, refer to the foregoing part of term explanation. Details are not described herein again.

In some possible manners, the method shown in FIG. 3 further includes step B1.

For example, B1: The first apparatus determines that a CGO in a third time period may be indicated as used. It may also be understood that the first apparatus determines that the CGO in the third time period is not indicated as unused. For example, the first apparatus determines that N1 CGOs in the third time period may be indicated as used, the N1 CGOs are within the N CGOs, and N1 is a positive integer less than or equal to N. For example, if the N CGOs include the CGOs in the slots U0 to U3, and the third time period includes the slot U3, in other words, the CGO in the slot U3 is within the third time period, the first apparatus determines that the CGO in the slot U3 is used. In an implementation, the first apparatus determines, based on information #2 from the second apparatus, that the CGO in the third time period may be indicated as used. For descriptions of the information #2, refer to the following manner b1. Details are not described herein.

Alternatively,
for example, B1: The first apparatus determines a third time period. A CGO in the third time period is indicated as used. It may also be understood that the CGO in the third time period is not indicated as unused. For example, when N1 CGOs in the N CGOs are within the third time period, the first indication information indicates that the N1 CGOs are used, and N1 is a positive integer less than or equal to N. For example, if the N CGOs include the CGOs in the slots U0 to U3, and the third time period includes the slot U3, in other words, the CGO in the slot U3 is within the third time period, the first indication information may indicate that the CGO in the slot U3 is used.

The following first describes the third time period.

In some possible manners, the third time period may be within the first CG periodicity. The first CG periodicity may be determined by the first apparatus based on third information from the second apparatus. In other words, the third information may be used to determine the first CG periodicity. For specific content of the third information, refer to the descriptions of the third information in S301. Details are not described herein again.

In some implementations, a start moment of the third time period is determined based on the start moment of the first CG periodicity. In some examples, the start moment of the third time period is the same as the start moment of the first CG periodicity. For example, the start moment of the first CG periodicity is 0 ms, and the start moment of the third time period is also 0 ms. In some other examples, an interval between the start moment of the third time period and the start moment of the first CG periodicity is a fourth time interval. For example, if the start moment of the first CG periodicity is 0 ms, and the fourth time interval is 5 ms, the start moment of the third time period is 5 ms. The fourth time interval may be preset, or may be obtained by the first apparatus from the second apparatus. For example, the second apparatus may indicate the fourth time interval to the first apparatus by using RRC signaling, DCI, or a MAC CE. This is not limited in this application.

In some other implementations, an end moment of the third time period is determined based on the first CG periodicity. In some examples, the end moment of the third time period is the same as the end moment of the first CG periodicity. For example, the end moment of the first CG periodicity is 30 ms, and the end moment of the third time period is also 30 ms. In some other examples, the end moment of the third time period is an end moment of the third CGO, and the third CGO is the last CGO or the last valid CGO in the first CG periodicity. For example, the first CG periodicity is a CG periodicity #1, and the CG periodicity #1 includes four valid CGOs: CGOs in slots U6 to U9. The end moment of the third time period is an end moment of a CGO in the slot U9. For another example, the first CG periodicity is a CG periodicity #1, and the CG periodicity #1 includes six CGOs: CGOs in slots U6 to UB. The end moment of the third time period is an end moment of a CGO in the slot UB. In still some other examples, an interval between the end moment of the third time period and the end moment of the first CG periodicity is a fifth time interval. For example, if the end moment of the first CG periodicity is 30 ms, and the fifth time interval is 4 ms, the end moment of the third time period is 26 ms. The fifth time interval may be preset, or may be obtained by the first apparatus from the second apparatus. For example, the second apparatus may indicate the fifth time interval to the first apparatus by using RRC signaling, DCI, or a MAC CE. This is not limited in this application. In still some other examples, an interval between the end moment of the third time period and the start moment of the first CG periodicity is a sixth time interval. For example, if the start moment of the first CG periodicity is 0 ms, and the sixth time interval is 6 ms, the end moment of the third time period is 6 ms. The sixth time interval may be preset, or may be obtained by the first apparatus from the second apparatus. For example, the second apparatus may indicate the sixth time interval to the first apparatus by using RRC signaling, DCI, or a MAC CE. This is not limited in this application.

In some other possible manners, the third time period may have an intersection with a plurality of consecutive CG periodicities. The plurality of consecutive CG periodicities may be determined by the first apparatus based on the third information from the second apparatus. In other words, the third information may be used to determine the plurality of consecutive CG periodicities. For specific content of the third information, refer to the descriptions of the third information in S301. Details are not described herein again. In some examples, the third time period may include a plurality of consecutive CG periodicities. In this way, duration of the third time period is an integer multiple of duration of the CG periodicity. For example, the plurality of consecutive CG periodicities include a CG periodicity #0 and a CG periodicity #1, a start moment of the CG periodicity #0 is 0 ms, an end moment of the CG periodicity #1 is 60 ms, and the start moment and the end moment of the third time period are 0 ms and 60 ms respectively. In some other examples, the third time period includes all valid CGOs in a plurality of consecutive CG periodicities. For example, the plurality of consecutive CG periodicities include a CG periodicity #0 and a CG periodicity #1. The CG periodicity #0 includes four valid CGOs: CGOs in slots U0 to U3; and the CG periodicity #1 includes four valid CGOs: CGOs in slots U6 to U9. The start moment of the third time period is a start moment of a CGO in the slot U0, and the end moment of the third time period is an end moment of a CGO in the slot U9. In some other examples, the third time period includes all CGOs in a plurality of consecutive CG periodicities. For example, the plurality of consecutive CG periodicities include a CG periodicity #0 and a CG periodicity #1. The CG periodicity #0 includes six CGOs: CGOs in slots U0 to U5; and the CG periodicity #1 includes six CGOs: CGOs in slots U6 to UB. The start moment of the third time period is a start moment of a CGO in the slot U0, and the end moment of the third time period is an end moment of a CGO in the slot UB.

In this way, the third time period may include a part or all of CGOs in one CG periodicity, or may include a part or all of CGOs in a plurality of periodicities. With reference to FIG. 4E to FIG. 4G, an example in which the third time period includes a part of CGOs in one CG periodicity is used below to describe how the first indication information indicates that the N1 CGOs are used. It should be understood that when the third time period includes all of CGOs in one CG periodicity, or includes a part or all of CGOs in a plurality of periodicities, the first indication information may also indicate, in a similar manner, that the N1 CGOs are used.

For example, the relationship between the first CGO and the N CGOs is the relationship 4. FIG. 4E is used as an example. The first CG periodicity may be a CG periodicity #1, and the CG periodicity #1 includes four valid CGOs: CGOs in slots U6 to U9. The start moment of the third time period is the same as a start moment of the CG periodicity #1, and the end moment of the third time period is between slots U7 and U8, that is, the third time period includes CGOs in the slots U6 and U7. Therefore, the CGOs in the slots U6 and U7 cannot be indicated as unused. Before the slot U1, to-be-transmitted data obtained by the MAC entity of the first apparatus includes the data #2. For specific content of the data #2, refer to S302. The MAC entity may determine, based on a data amount of the data #2, to use three valid CGOs to transmit the data #2. The three valid CGOs are, for example, CGOs in slots U1 to U3. The first apparatus sends first indication information #a1 on the CGO in the slot U1. The first indication information #a1 may be 000, indicating that the CGOs in the slots U2, U3, and U6 are used. In the slot U2 or before the slot U2, the MAC entity may determine, based on a remaining data amount of the data #2, that one valid CGO after the slot U2 further needs to be used to transmit remaining data of the data #2, where the one valid CGO is, for example, a CGO in the slot U3. The first apparatus sends first indication information #a2 on the CGO in the slot U2. The first indication information #a2 may be 000, indicating that the CGOs in the slots U3, U6, and U7 are used. In the slot U3 or before the slot U3, the MAC entity may determine, based on a remaining data amount of the data #2, that there is no need to use a valid CGO after the slot U3 to transmit remaining data of the data #2. The first apparatus sends first indication information #a3 on the CGO in the slot U3. The first indication information #a3 may be 001, indicating that the CGOs in the slots U6 and U7 are used and the CGO in the slot U8 is not used.

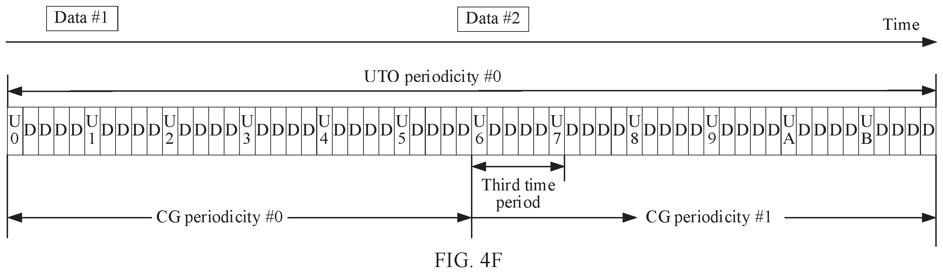

For another example, the relationship between the first CGO and the N CGOs is the relationship 2. FIG. 4F is used as an example. The first CG periodicity may be a CG periodicity #1, and the CG periodicity #1 includes four valid CGOs: CGOs in slots U6 to U9. The start moment of the third time period is the same as a start moment of the CG periodicity #1, and the end moment of the third time period is between slots U7 and U8, that is, the third time period includes CGOs in the slots U6 and U7. Therefore, the CGOs in the slots U6 and U7 cannot be indicated as unused. Before the slot U2, to-be-transmitted data obtained by the MAC entity of the first apparatus includes the data #2. For specific content of the data #2, refer to S302. The MAC entity may determine, based on a data amount of the data #2, to use two valid CGOs to transmit the data #2. The two valid CGOs are, for example, CGOs in slots U2 and U3. The first apparatus sends first indication information #a4 on the CGO in the slot U2. The first indication information #a4 may include 000011, indicating that the CGOs in the slots U2, U3, U6, and U7 are used and the CGOs in the slots U8 and U9 are not used. The first apparatus may further send the first indication information #a4 on the CGO in the slot U3. Optionally, the first indication information #a4 further includes information indicating whether CGOs in the slots U0 and U1 are used. For specific content of the information indicating whether the CGOs in the slots U0 and U1 are used, refer to the descriptions of the information indicating whether the CGOs in the slots U0 and U1 are used in the example a. Details are not described herein again.

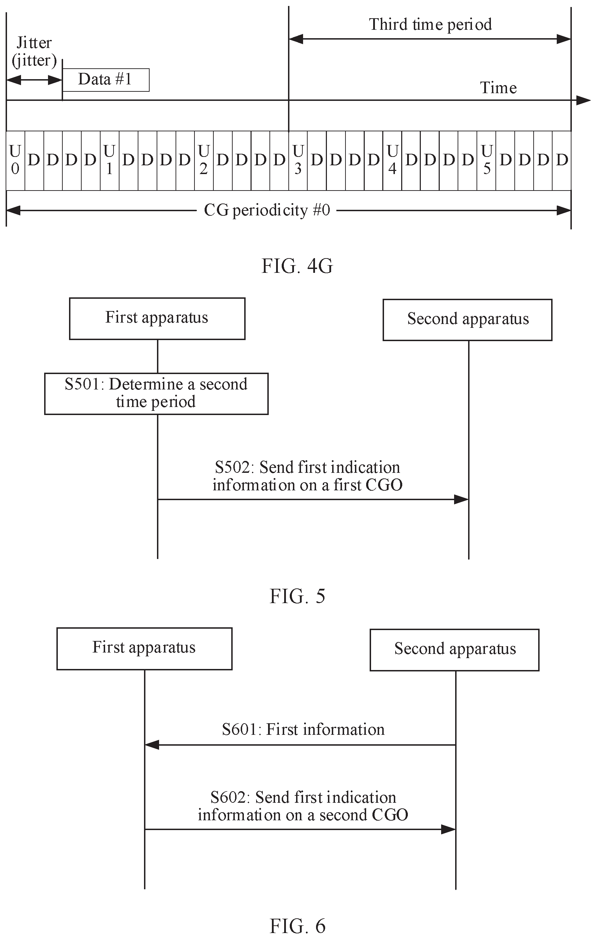

For another example, the relationship between the first CGO and the N CGOs is the relationship 1. FIG. 4G is used as an example. The first CG periodicity may be a CG periodicity #0, and the CG periodicity #0 includes five valid CGOs: CGOs in slots U0 to U4. The start moment of the third time period is between the slots U2 and U3, and the end moment of the third time period is after the slot U4, that is, the third time period includes CGOs in the slots U3 and U4. Therefore, the CGOs in the slots U3 and U4 cannot be indicated as unused. Before the slot U1, to-be-transmitted data obtained by the MAC entity of the first apparatus includes the data #2. For specific content of the data #2, refer to S302. The MAC entity may determine, based on a data amount of the data #2, to use two valid CGOs to transmit the data #2. The two valid CGOs are, for example, CGOs in slots U1 and U2. The first apparatus sends first indication information #a5 on the CGO in the slot U1. The first indication information #a5 may include 0000, indicating that the CGOs in the slots U1 to U5 are used. The first apparatus sends the first indication information #a5 on the CGO in the slot U2. Optionally, the first indication information #a5 further includes information indicating whether the CGO in the slot U0 is used. For specific content of the information indicating whether the CGO in the slot U0 is used, refer to the descriptions of the information indicating whether the CGOs in the slots U0 and U1 are used in the example a. The only difference is that the slots U0 and U1 are replaced with the slot U0. Details are not described herein again.

Optionally, the third time period may be periodic. For a periodicity of the third time period, refer to the descriptions of the periodicity of the first time period in S301. The only difference is that the first time period is replaced with the third time period. Details are not described herein again. The periodicity of the third time period may be the same as the periodicity of the first time period and/or the periodicity of the second time period, or may be different from both the periodicity of the first time period and the periodicity of the second time period.

Optionally, in step B1, the first apparatus may determine the third time period in a plurality of manners, for example, a manner b1 or a manner b2.

Manner b1: The first apparatus determines the third time period based on information #2 from the second apparatus.

The information #2 may indicate the third time period. For specific content of indicating the third time period by the information #2, refer to the descriptions of indicating the first time period by the first information in S301. The only difference is that the first information is replaced with the information #2, and the first time period is replaced with the third time period. Details are not described herein again.

For example, the third time period may be semi-persistently configured. For example, the information #2 indicating the third time period may be carried in RRC signaling. Alternatively, the third time period may be dynamically indicated. For example, the information #2 is carried in DCI or a MAC CE.

In some possible manners, the third time period may be determined by the second apparatus. Optionally, the third time period may be determined by the second apparatus based on the jitter information of the first data. For specific content of the jitter information of the first data, refer to S301. Details are not described herein again. For example, the second apparatus determines the third time period based on the first CG periodicity and the jitter information of the first data. For example, the jitter information includes [-4 ms, 4 ms]. The second apparatus may determine that the start moment of the third time period is the same as the start moment of the first CG periodicity, and the duration of the third time period is 5 ms.

Manner b2: The first apparatus determines the third time period. In some implementations, for specific content of determining the third time period by the first apparatus, refer to the descriptions of determining the third time period by the second apparatus in the manner b1. Details are not described herein again. In some other implementations, the third time period may be preset, for example, specified in a protocol. For example, the third time period is preset to be the same as the first CG periodicity. For specific content of the first CG periodicity, refer to the descriptions of the first CG periodicity in S301. The first apparatus may determine the third time period based on the first CG periodicity.

According to the method, the first indication information may indicate that the CGO in the third time period is used, so that the CGO is not incorrectly indicated as unused, to avoid affecting data transmission and reduce a data transmission delay. For example, a CG periodicity #0 and a CG periodicity #1 are adjacent CG periodicities, and the CG periodicity #0 is before the CG periodicity #1. The third time period includes the first two valid CGOs in the CG periodicity #1. When the first apparatus transmits the first indication information on a CGO in the CG periodicity #0, the first indication information may indicate that the first two valid CGOs are used. In this way, when the first apparatus needs to transmit data in the CG periodicity #1, a part or all of the first two valid CGOs may be used for transmission, to avoid affecting data transmission and reduce a data transmission delay.

Optionally, in steps A1 and B1, the first CG periodicity may be replaced with a first UTO periodicity. For specific content of the first UTO periodicity, refer to the foregoing part of term explanation. Details are not described herein again.

In some possible manners, the first indication information indicates whether the CGO in the third time period is used or not, which is related to a location relationship between the first CGO and the CGO in the third time period. The following describes this with reference to a manner e1 and a manner e2.

Manner e1: If the N1 CGOs in the third time period and the first CGO are within different CG periodicities, the first indication information transmitted on the first CGO indicates that the N1 CGOs are used. The N1 CGOs may be all or a part of CGOs, in the N CGOs, that are within the third time period. For example, as shown in FIG. 4E or FIG. 4F, the start moment of the third time period is the same as the start moment of the CG periodicity #1, and the end moment of the third time period is between slots U7 and U8. If the first CGO is a CGO (for example, a CGO in the slot U3) in the CG periodicity #0, and the N1 CGOs are CGOs (for example, CGOs in the slots U6 and U7) in the CG periodicity #1, the N1 CGOs are indicated as used. For another example, the third time period is the CG periodicity #1, that is, a length of the third time period is the same as a length of the CG periodicity #1. If the first CGO is a CGO (for example, a CGO in the CG periodicity #0) in a CG periodicity other than the CG periodicity #1, and the N1 CGOs are all of CGOs in the CG periodicity #1, the N1 CGOs are indicated as used.

It should be understood that the CG periodicity of the first CGO may be adjacent to or not adjacent to the CG periodicity of the N1 CGOs. The CG periodicity of the first CGO may be before the CG periodicity of the N1 CGOs.

Manner e2: If N2 CGOs in the third time period and the first CGO are within a same CG periodicity, and the N2 CGOs belong to the N CGOs, the first indication information transmitted on the first CGO may indicate that the N2 CGOs are not used. The N2 CGOs may be all or a part of CGOs, in the N CGOs, that are within the third time period, and N2 is a positive integer less than or equal to N. For example, as shown in FIG. 4E or FIG. 4F, the start moment of the third time period is the same as the start moment of the CG periodicity #1, and the end moment of the third time period is between slots U7 and U8. If the first CGO and the N2 CGOs are CGOs in the CG periodicity #1, for example, the first CGO is a CGO in the slot U6, and the N2 CGOs are CGOs in the slot U7, the N2 CGOs may be indicated as unused. For another example, the third time period is the CG periodicity #1. If the first CGO and the N2 CGOs are CGOs in the CG periodicity #1, for example, the first CGO is a CGO in the slot U6, and the N2 CGOs are CGOs in the slot U7, the N2 CGOs may be indicated as unused.

As described above, the third time period may be the same as the first CG periodicity. In this case, the third time period and the first CG periodicity may be replaced with each other. For example, the third time period in the manner e1 and the manner e2 may be replaced with the first CG periodicity. In one manner, it may be understood as that there is only one concept: the first CG periodicity, and there is no need for two concepts: the third time period and the first CG periodicity. In another manner, it may be understood as that there are two concepts: the first CG periodicity and the third time period. Optionally, the second apparatus may indicate, to the first apparatus, that the first indication information indicates whether the CGO in the third time period is used or not, which is related to the location relationship between the first CGO and the CGO in the third time period. For example, the second apparatus may send RRC signaling 1 to the first apparatus. When a value of a second field in the RRC signaling 1 is a first value (for example, 0 or 1), it indicates that the first indication information indicates whether the CGO in the third time period is used or not, which is related to the location relationship between the first CGO and the CGO in the third time period. In this way, if the first apparatus detects that a value of the second field is the first value, the first apparatus may determine the first indication information in the manner e1 and/or the manner e2.

In some possible manners, S301 is an optional step. In this case, the first apparatus may determine the first time period based on the jitter information of the first data. For a manner in which the first apparatus determines the first time period based on the jitter information, refer to the descriptions of determining the first time period by the second apparatus based on the jitter information in S301. Details are not described herein again.

Optionally, when the first apparatus determines at least one of the first time period, the second time period, or the third time period, the first apparatus may first send the jitter information to the second apparatus, and then perform the method shown in FIG. 3. For a manner in which the first apparatus sends the jitter information, refer to S301. After receiving the jitter information, the second apparatus may adjust uplink transmission based on the jitter information. For an adjustment manner, refer to S301. Details are not described herein again.

In some examples, the first apparatus may immediately perform the method shown in FIG. 3 after sending the jitter information. In some other examples, the first apparatus may perform the method shown in FIG. 3 after first duration since the first apparatus sends the jitter information. A start moment of the first duration may be an end moment of a PUSCH on which the first apparatus sends the jitter information. The first duration may be preset, or may be obtained by the first apparatus from the second apparatus. This is not limited in this application. Optionally, an end moment of the first duration may be determined by using the following step: The first apparatus receives an uplink grant, where the uplink grant is used to transmit new transmission data, and hybrid automatic repeat request (hybrid automatic repeat request, HARQ) information (for example, a HARQ process number) of the uplink grant is consistent with HARQ information of the PUSCH on which the jitter information is sent. In this case, the first apparatus may determine that the first duration ends.

In some possible manners, the second apparatus may further send configuration information #1 to the first apparatus. The configuration information #1 may indicate whether the first apparatus may determine at least one of the first time period, the second time period, or the third time period based on the jitter information. When the configuration information #1 indicates that the first apparatus may determine at least one of the first time period, the second time period, or the third time period based on the jitter information, the first apparatus may determine at least one of the first time period, the second time period, or the third time period after receiving the configuration information #1. The configuration information #1 may be semi-persistently configured, or may be preconfigured or dynamically indicated.

In some other possible manners, the second apparatus may further send configuration information #2 to the first apparatus. The configuration information #2 may indicate whether the first apparatus may perform the method shown in FIG. 3 after the first duration since the first apparatus sends the jitter information. When the configuration information #2 indicates that the first apparatus may perform the method shown in FIG. 3 after the first duration since the first apparatus sends the jitter information, after receiving the configuration information #2, the first apparatus may perform the method shown in FIG. 3 after the first duration since the first apparatus sends the jitter information. The configuration information #2 may be semi-persistently configured, or may be preconfigured or dynamically indicated.

An embodiment of this application further provides a communication method. FIG. 5 is a schematic flowchart corresponding to a communication method according to an embodiment of this application. In FIG. 5, the method is illustrated by using an example in which a first apparatus and a second apparatus are used as execution bodies of interaction illustration. However, the execution bodies of the interaction illustration are not limited in this application. For example, the first apparatus may be a terminal, or may be a module used in the terminal, for example, a chip, a chip system, or a processor, or may be a logical node, a logical module, or software that can implement all or some functions of the terminal. The second apparatus may be an access network device, or may be a module used in the access network device, for example, a chip, a chip system, or a processor, or may be a logical node, a logical module, or software that can implement all or some functions of the access network device.

As shown in FIG. 5, the method includes the following steps.

S501: The first apparatus determines a second time period.

For specific content of S501, refer to step A1. Details are not described herein again.

S502: The first apparatus sends first indication information on a first CGO; and correspondingly, the second apparatus receives the first indication information on the first CGO.

The first CGO is within the second time period. For example, the second time period includes slots U2 and U3, and the first CGO may be a CGO in either of the slots U2 and U3. The first indication information may indicate whether each of N CGOs is used, and N is a positive integer. For example, the first indication information may be UTO-UCI.

The first indication information may be determined based on a data amount of first data. In other words, when a sending moment of the first indication information or the first CGO is within the second time period, a MAC entity of the first apparatus may determine, based on the data amount of the first data, content of the first indication information, or determine, based on the data amount of the first data, how the first indication information indicates whether each of the N CGOs is available. Whether a part or all of the N CGOs are used is determined based on the data amount of the first data. The first data is obtained by the first apparatus before a start moment of the first CGO. In other words, the first data is to-be-sent data of the first apparatus at the start moment of the first CGO.

For a relationship between the first CGO and the N CGOs, refer to the descriptions of the relationship between the first CGO and the N CGOs in S302. For specific content of the first indication information, refer to the descriptions of the first indication information in S302. Details are not described herein again.

According to the method shown in FIG. 5, when the first apparatus sends the first indication information on the first CGO in the second time period, the first indication information may be determined based on data obtained before the start moment of the first CGO, so that content of the first indication information can be accurately determined, and whether the N CGOs are used can be accurately notified.

In some possible manners, before S502, the method shown in FIG. 5 further includes step C1.

C1: The first apparatus determines a third time period. When N1 CGOs in the N CGOs are within the third time period, the first indication information indicates that the N1 CGOs are used, and N1 is a positive integer less than or equal to N.

For specific content of step C1, refer to step B1. Details are not described herein again.

According to the method, the first indication information may indicate that the CGO in the third time period is used, so that the CGO is not incorrectly indicated as unused, to avoid affecting data transmission and reduce the data transmission delay. For example, a CG periodicity #0 and a CG periodicity #1 are adjacent CG periodicities, and the CG periodicity #0 is before the CG periodicity #1. The third time period includes the first two valid CGOs in the CG periodicity #1. When the first apparatus transmits the first indication information on a CGO in the CG periodicity #0, the first indication information may indicate that the first two valid CGOs are used. In this way, when the first apparatus needs to transmit data in the CG periodicity #1, a part or all of the first two valid CGOs may be used for transmission, to avoid affecting data transmission and reduce a data transmission delay.

In some possible manners, the method shown in FIG. 5 further includes step D1.

D1: The first apparatus sends second indication information on a second CGO; and correspondingly, the second apparatus receives the second indication information on the second CGO. The second CGO is within a first time period. The second indication information may indicate that M CGOs are used, and M is a positive integer. The second indication information is not determined based on a data amount of to-be-transmitted data. For example, the second indication information is not determined based on the data amount of the first data. For specific content of step D1, refer to S303. Details are not described herein again.

According to the method, when the second indication information is sent on the second CGO in the first time period, the second indication information is not determined based on the data amount of the to-be-transmitted data, and may indicate that the M CGOs are used. Therefore, the first apparatus does not determine, based on an incorrect data amount, whether a CGO is used, to avoid affecting data transmission and reduce the data transmission delay. For example, when uplink data is delayed in being obtained by the MAC entity of the first apparatus due to jitter, or a part of data packets in the uplink data are delayed in being obtained by the MAC entity, the first apparatus does not determine, in the first time period based on the data amount of the to-be-transmitted data, whether the CGO is used, and therefore does not report, to an access network device, that a part or all of the M CGOs are not used, where the part or all of the M CGOs may be used to transmit the uplink data or the part of data packets in the uplink data delayed in being obtained by the MAC entity, to avoid affecting data transmission and reduce the data transmission delay.

In some other possible manners, the first apparatus does not send, on the second CGO, third indication information indicating whether the M CGOs are used. The third indication information is, for example, UTO-UCI. For specific content of the second CGO and the M CGOs, refer to S303. Details are not described herein again. For example, FIG. 4A, FIG. 4B, or FIG. 4C is still used as an example. The first time period includes slots U0 and U1, and the first apparatus does not send the UTO-UCI on CGOs in the slots U0 and U1. For another example, FIG. 4D is still used as an example. The first time period includes a slot U0, and the first apparatus does not send the UTO-UCI on a CGO in the slot U0.

According to the method, the first apparatus does not send, on the second CGO, the third indication information indicating whether the M CGOs are used. Therefore, the first apparatus does not determine, based on an incorrect data amount, whether a CGO is used, to avoid affecting data transmission and reduce a data transmission delay. For example, when uplink data is delayed in being obtained by the MAC entity of the first apparatus due to jitter, or a part of data packets in the uplink data are delayed in being obtained by the MAC entity, the first apparatus does not determine, in the first time period based on the data amount of the to-be-transmitted data, whether the CGO is used, and therefore does not report, to an access network device, that a part or all of the M CGOs are not used, where the part or all of the M CGOs may be used to transmit the uplink data or the part of data packets in the uplink data delayed in being obtained by the MAC entity, to avoid affecting data transmission and reduce the data transmission delay.

Optionally, the first apparatus may determine the first time period. There are a plurality of manners in which the first apparatus determines the first time period, for example, a manner c1 or a manner c2.

Manner c1: The second apparatus sends first information; and correspondingly, the first apparatus receives the first information. The first information may indicate the first time period. In this way, the first apparatus may determine the first time period based on the first information. For specific content of the manner c1, refer to S301. Details are not described herein again.

Manner c2: The first apparatus may determine the first time period based on jitter information of the first data. For a manner in which the first apparatus determines the first time period based on the jitter information, refer to the descriptions of determining the first time period by the second apparatus based on the jitter information in S301. Details are not described herein again.

Optionally, when the first apparatus determines at least one of the first time period, the second time period, or the third time period, the first apparatus may first send the jitter information to the second apparatus, and then perform the method shown in FIG. 5. For a manner in which the first apparatus sends the jitter information, refer to S301. After receiving the jitter information, the second apparatus may adjust uplink transmission based on the jitter information. For an adjustment manner, refer to S301. Details are not described herein again.

In some examples, the first apparatus may immediately perform the method shown in FIG. 5 after sending the jitter information. In some other examples, the first apparatus may perform the method shown in FIG. 5 after first duration since the first apparatus sends the jitter information. For specific content of the first duration, refer to the descriptions of the first duration in the method shown in FIG. 3. Details are not described herein again.

In some possible manners, the second apparatus may further send configuration information #1 to the first apparatus. The configuration information #1 may indicate whether the first apparatus may determine at least one of the first time period, the second time period, or the third time period based on the jitter information. When the configuration information #1 indicates that the first apparatus may determine at least one of the first time period, the second time period, or the third time period based on the jitter information, the first apparatus may determine at least one of the first time period, the second time period, or the third time period after receiving the configuration information #1. The configuration information #1 may be semi-persistently configured, or may be preconfigured or dynamically indicated.

In some other possible manners, the second apparatus may further send configuration information #2 to the first apparatus. The configuration information #2 may indicate whether the first apparatus may perform the method shown in FIG. 5 after the first duration since the first apparatus sends the jitter information. When the configuration information #2 indicates that the first apparatus may perform the method shown in FIG. 5 after the first duration since the first apparatus sends the jitter information, after receiving the configuration information #2, the first apparatus may perform the method shown in FIG. 5 after the first duration since the first apparatus sends the jitter information. The configuration information #2 may be semi-persistently configured, or may be preconfigured or dynamically indicated.

An embodiment of this application further provides a communication method. FIG. 6 is a schematic flowchart corresponding to a communication method according to an embodiment of this application. In FIG. 6, the method is illustrated by using an example in which a first apparatus and a second apparatus are used as execution bodies of interaction illustration. However, the execution bodies of the interaction illustration are not limited in this application. For example, the first apparatus may be a terminal, or may be a module used in the terminal, for example, a chip, a chip system, or a processor, or may be a logical node, a logical module, or software that can implement all or some functions of the terminal. The second apparatus may be an access network device, or may be a module used in the access network device, for example, a chip, a chip system, or a processor, or may be a logical node, a logical module, or software that can implement all or some functions of the access network device.

As shown in FIG. 6, the method includes the following steps.

S601: The second apparatus sends first information; and correspondingly, the first apparatus receives the first information.

The first information indicates a first CG. For example, the first information includes information such as a periodicity length of the first CG and an index of the first CG. In this way, the first apparatus may determine the first CG based on the first information. Optionally, the first information may be carried in RRC signaling and/or DCI.

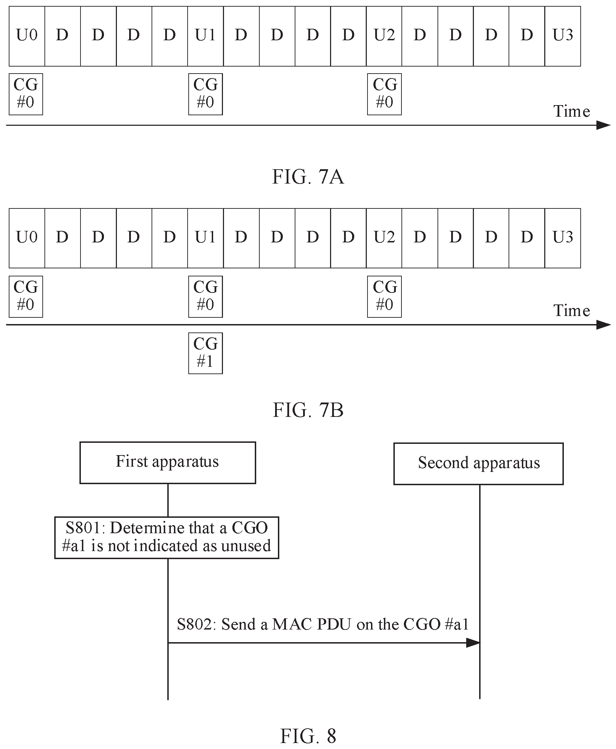

The first CG may include a first CGO. The first CGO is used to transmit a first MAC PDU. In other words, the first CGO corresponds to the first MAC PDU. The first MAC PDU is a de-prioritized MAC PDU. For example (an example 1 for short below), as shown in FIG. 7A, the first CG is a CG #0. The CG #0 includes three valid CGOs: CGOs in slots U0 to U2. The first CGO may be a CGO (a CGO #a1 for short below) in the slot U1 included in the CG #0. The CGO #a1 may be used to transmit the first MAC PDU, and the first MAC PDU is de-prioritized. In other words, the first MAC PDU is the de-prioritized MAC PDU.

In some possible manners, the first apparatus may determine, at a first moment, that the first CGO is used to transmit the first MAC PDU, and determine, at a second moment, that the first MAC PDU is the de-prioritized MAC PDU, where the first moment is earlier than the second moment. In other words, the first apparatus first determines that the first CGO is used to transmit the first MAC PDU, and then determines that the first MAC PDU is the de-prioritized MAC PDU. Optionally, after determining that the first MAC PDU is the de-prioritized MAC PDU, the first apparatus may not transmit the first MAC PDU on the first CGO. In this case, the first CGO is not used by the first apparatus.

S602: The first apparatus sends first indication information on a second CGO; and correspondingly, the second apparatus receives the first indication information on the second CGO. The first indication information may indicate that the first CGO is not used, and the second CGO is before the first CGO. The second CGO may be a CGO in the first CG, or may be a CGO in a CG other than the first CG.

The first indication information may be determined or generated by the first apparatus at a third moment, and the third moment is later than the second moment. In other words, the first apparatus may first determine that the first MAC PDU is the de-prioritized MAC PDU, and then determine or generate the first indication information.

For example, in the example 1, the first CG is the CG #0. The first CGO is the CGO (the CGO #a1 for short below) in the slot U1 included in the CG #0. The second CGO is a CGO (a CGO #a2 for short below) in the slot U0 included in the CG #0. The first apparatus may send the first indication information on the CGO #a2, where the first indication information may indicate that the CGO #a1 is not used.

Optionally, in S602, the first indication information transmitted on the second CGO indicates whether each of N CGOs is used, and the N CGOs include the first CGO. For a relationship between the second CGO and the N CGOs, refer to the foregoing relationship 1 to relationship 4. Details are not described herein again.

In some possible manners, before S602, the second apparatus may send first configuration information; and correspondingly, the first apparatus receives the first configuration information. The first configuration information may indicate to send the first indication information on a CGO of the first CG. The first configuration information may be semi-persistently configured, or may be preconfigured or dynamically indicated. The first configuration information and the first information may be carried in a same message, or may be carried in different messages. This is not limited in this application.

According to the method shown in FIG. 6, when indicating whether to use the first CGO, the first apparatus considers whether the first CGO is available. When the first MAC PDU corresponding to the first CGO is the de-prioritized MAC PDU, the first CGO is unavailable, and the first apparatus indicates that the first CGO is not used. In this way, the second apparatus does not need to detect a CGO corresponding to a de-prioritized MAC PDU, to reduce complexity of blind detection by the second apparatus.

In some possible manners, before S602, the method shown in FIG. 6 further includes step E1.

E1: The first apparatus determines a second CG.

In some possible manners, the first apparatus may determine the second CG based on second information from the second apparatus. The second information may indicate the second CG. For example, the second information includes information such as a periodicity length of the second CG and an index of the second CG. Optionally, the second information may be carried in RRC signaling and/or DCI.

The second CG may include a third CGO, and a resource corresponding to the first CGO overlaps a resource corresponding to the third CGO. For example, as shown in FIG. 7B, the first CG is the CG #0. The first CGO is the CGO (the CGO #a1 for short below) in the slot U1 included in the CG #0. The second CGO is the CGO (the CGO #a2 for short below) in the slot U0 included in the CG #0. The second CG is a CG #1. The third CGO is a CGO (a CGO #a3 for short below) in the slot U1 included in the CG #1. A resource corresponding to the CGO #a1 overlaps a resource corresponding to the CGO #a3. The CGO #a1 may be used to transmit the first MAC PDU, and the first MAC PDU is the de-prioritized MAC PDU. The first apparatus may send the first indication information on the CGO #a2, where the first indication information may indicate that the CGO #a1 is not used.

Optionally, when the resource corresponding to the first CGO overlaps the resource corresponding to the third CGO, the first apparatus may determine, based on the first MAC PDU corresponding to the first CGO and a second MAC PDU corresponding to the third CGO, that the first MAC PDU is the de-prioritized MAC PDU.

For example, the first apparatus may determine, based on a priority of first data corresponding to the first MAC PDU and a priority of second data corresponding to the second MAC PDU, that the first MAC PDU is the de-prioritized MAC PDU. The first data includes at least one of the following: data included in the first MAC PDU, or data that may be included in the first MAC PDU. The data that may be included in the first MAC PDU is, for example, data of an LCH bound to the first CG. The second data includes at least one of the following: data included in the second MAC PDU, or data that may be included in the second MAC PDU. The data that may be included in the second MAC PDU is, for example, data of an LCH bound to the second CG. For example, if the priority of the first data is lower than the priority of the second data, the first apparatus may determine to send the second MAC PDU by using the resource corresponding to the third CGO, and determine that the first MAC PDU is the de-prioritized MAC PDU. In this case, the first apparatus does not send the first MAC PDU by using the resource corresponding to the first CGO.

Optionally, if the priority of the first data is the same as the priority of the second data, or the first apparatus is not configured to transmit a MAC PDU based on a priority of data, the first apparatus may choose to transmit one of the first MAC PDU and the second MAC PDU. When the first apparatus chooses to transmit the second MAC PDU, the first apparatus may de-prioritize the first MAC PDU, that is, the first MAC PDU is the de-prioritized MAC PDU. Currently, if the priority of the first data is the same as the priority of the second data, or the first apparatus is not configured to transmit the MAC PDU based on the priority of the data, when the resource corresponding to the first CGO overlaps the resource corresponding to the third CGO, the second apparatus does not know a specific CGO corresponding to a resource used by the first apparatus to transmit the MAC PDU, and needs to separately detect the resource corresponding to the first CGO and the resource corresponding to the third CGO, increasing complexity of the second apparatus. According to the method in this application, the first apparatus may indicate that the first CGO is not used. In this way, the second apparatus does not need to separately detect the resource corresponding to the first CGO and the resource corresponding to the third CGO, to reduce blind detection complexity of the second apparatus.

An embodiment of this application further provides another communication method. FIG. 8 is a schematic flowchart corresponding to a communication method according to an embodiment of this application. In FIG. 8, the method is illustrated by using an example in which a first apparatus and a second apparatus are used as execution bodies of interaction illustration. However, the execution bodies of the interaction illustration are not limited in this application. For example, the first apparatus may be a terminal, or may be a module used in the terminal, for example, a chip, a chip system, or a processor, or may be a logical node, a logical module, or software that can implement all or some functions of the terminal. The second apparatus may be an access network device, or may be a module used in the access network device, for example, a chip, a chip system, or a processor, or may be a logical node, a logical module, or software that can implement all or some functions of the access network device.

S801: The first apparatus determines that a CGO #a1 is not indicated as unused.

In some examples, when the first apparatus indicates that the CGO #a1 is used, the first apparatus may determine that the CGO #a1 is not indicated as unused. For example, the first apparatus sends first indication information on a first CGO. The first CGO is not within a first time period, or the first CGO is within a second time period. The first indication information may indicate whether each of N CGOs is used, and N is a positive integer. The N CGOs include the CGO #a1. The first indication information indicates that the CGO #a1 is used. For specific content of sending the first indication information by the first apparatus on the first CGO, refer to S302. Details are not described herein again. For another example, the first apparatus sends second indication information on a second CGO. The second CGO is within the first time period, or the second CGO is not within the second time period. The second indication information may indicate that M CGOs are used. The M CGOs include the CGO #a1. For specific content of sending the second indication information by the first apparatus on the second CGO, refer to S303. Details are not described herein again.

In some other examples, when the first apparatus does not send indication information indicating whether the CGO #a1 is used, the first apparatus may determine that the CGO #a1 is not indicated as unused. For example, the first apparatus does not send, on the second CGO, third indication information indicating whether the M CGOs are used, where the M CGOs include the CGO #a1. For specific content that the first apparatus does not send the third indication information on the second CGO, refer to the descriptions of "the first apparatus does not send, on the second CGO, the third indication information indicating whether the M CGOs are used" in the method shown in FIG. 3. Details are not described herein again.

S802: The first apparatus sends a MAC PDU on the CGO #a1; and correspondingly, the second apparatus receives the MAC PDU on the CGO #a1.

For example, when the CGO #a1 is not indicated as unused, regardless of whether there is a MAC SDU (for example, to-be-transmitted data) corresponding to the CGO #a1, a MAC entity of the first apparatus may generate a MAC PDU for a HARQ entity corresponding to the CGO #a1. For example, when a MAC SDU corresponding to the CGO #a1 exists, the MAC entity may generate a MAC PDU in a padding manner. Then, the first apparatus may send the MAC PDU on the CGO #a1. Optionally, the MAC entity may be configured with an enhanced skip uplink transmission configuration (enhancedSkipUplinkTxConfigured = true).

In the method shown in FIG. 8, when the CGO #a1 is not indicated as unused, the first apparatus sends the MAC PDU on the CGO #a1. Therefore, a condition for not generating the MAC PDU by the MAC entity may include: a CGO corresponding to the MAC PDU is not indicated as used.

In some examples, the condition for not generating the MAC PDU by the MAC entity may further include at least one of the following: a grant corresponding to the HARQ entity is determined based on a CG, where the MAC PDU corresponding to the grant does not include a MAC SDU or includes 0 MAC SDUs; and the MAC PDU includes only a periodic buffer status report (buffer status report, BSR) and there is no to-be-transmitted data on a logical channel group (logic channel group, LCG) bound to the grant, or the MAC PDU includes only a padding BSR. Optionally, the condition for not generating the MAC PDU by the MAC entity further includes: a PUSCH corresponding to the grant does not include aperiodic channel state information (channel state information, CSI).

In some other examples, the condition for not generating the MAC PDU by the MAC entity may further include at least one of the following: the MAC entity is configured with the enhanced skip uplink transmission configuration; a grant corresponding to the HARQ entity is determined based on a CG, where a MAC PDU corresponding to the grant does not include a MAC SDU or includes 0 MAC SDUs; the MAC PDU includes only a periodic BSR and there is no to-be-transmitted data on an LCG bound to the grant, or the MAC PDU includes only a padding BSR; and no uplink control information (uplink control information, UCI) is reused onto a PUSCH corresponding to the grant. Optionally, the condition for not generating the MAC PDU by the MAC entity further includes: the PUSCH corresponding to the grant does not include aperiodic CSI.

Optionally, the aperiodic CSI in the PUSCH may be triggered by DCI for scheduling the PUSCH.

Currently, when there is no to-be-transmitted information corresponding to the CGO, for example, to-be-transmitted data, a MAC CE, and aperiodic CSI, the MAC entity may not generate the MAC PDU for the HARQ entity, and the first apparatus may not send information on a time-frequency resource corresponding to the CGO.

For example, the grant corresponding to the HARQ entity in the first apparatus is determined based on the CG; the PUSCH corresponding to the grant does not include the aperiodic CSI; the MAC PDU corresponding to the grant does not include the MAC SDU; and the MAC PDU includes only the periodic BSR and there is no to-be-transmitted data on the LCG bound to the grant, or the MAC PDU includes only the padding BSR. In this case, the MAC entity of the first apparatus does not generate the MAC PDU for the HARQ entity.

For another example, the MAC entity of the first apparatus is configured with the enhanced skip uplink transmission configuration; the grant corresponding to the HARQ entity is determined based on the CG; no UCI is reused onto the PUSCH corresponding to the grant; the PUSCH corresponding to the grant does not include the aperiodic CSI; the MAC PDU corresponding to the grant does not include the MAC SDU; and the MAC PDU includes only the periodic BSR and there is no to-be-transmitted data on the LCG bound to the grant, or the MAC PDU includes only the padding BSR. In this case, the MAC entity does not generate the MAC PDU for the HARQ entity.

Therefore, when there is no to-be-transmitted information corresponding to the CGO, and the CGO is not indicated as used, the first apparatus does not generate the MAC PDU corresponding to the CGO, and does not use the CGO to transmit information. Consequently, the CGO is not used, and a resource waste is caused. According to the method shown in FIG. 8, when a CGO is not indicated as unused, the first apparatus sends information on the CGO, increasing energy consumption of the first apparatus. In this way, the first apparatus can correctly indicate whether each CGO is used, to avoid unnecessary resource occupation of the first apparatus and improve resource utilization.

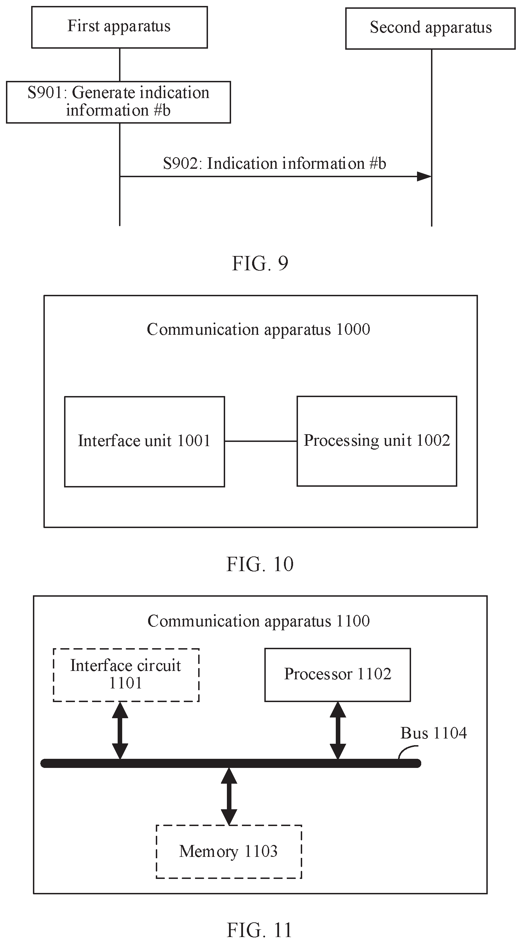

An embodiment of this application further provides another communication method. FIG. 9 is a schematic flowchart corresponding to a communication method according to an embodiment of this application. In FIG. 9, the method is illustrated by using an example in which a first apparatus and a second apparatus are used as execution bodies of interaction illustration. However, the execution bodies of the interaction illustration are not limited in this application. For example, the first apparatus may be a terminal, or may be a module used in the terminal, for example, a chip, a chip system, or a processor, or may be a logical node, a logical module, or software that can implement all or some functions of the terminal. The second apparatus may be an access network device, or may be a module used in the access network device, for example, a chip, a chip system, or a processor, or may be a logical node, a logical module, or software that can implement all or some functions of the access network device.

S901: A MAC layer (for example, a MAC entity) of the first apparatus generates indication information #b.

The indication information #b may indicate delay information of to-be-transmitted data, for example, a remaining transmission delay budget of the to-be-transmitted data. For example, the indication information #b is a MAC CE indicating delay information, for example, a delay status report (delay status reporting, DSR), and the delay status report may indicate the delay information of the to-be-transmitted data. Optionally, generation of the indication information #b may be triggered based on a threshold. For example, when the remaining transmission delay budget of the to-be-transmitted data is less than or equal to the threshold, the MAC layer may generate the MAC CE. The threshold may be preconfigured, or may be semi-persistently configured or dynamically indicated. This is not limited in this application.

In S901, the indication information #b may be generated in a plurality of manners, for example, a manner d1, a manner d2, or a manner d3.

Manner d1: A PDCP layer (for example, a PDCP entity) sends, to the MAC layer, information used to determine the delay information of the to-be-transmitted data; and the MAC layer starts a timer #2, and triggers and generates the indication information #b based on the timer #2.

When the PDCP layer sends the to-be-transmitted data to a lower layer (for example, a radio link control (radio link control, RLC) layer or the MAC layer), the PDCP layer may send a first value to the MAC layer. The first value is a value determined based on a current value of a timer #1 (for example, a packet discarding timer) corresponding to the to-be-transmitted data. For example, the first value is a difference between a value corresponding to a timeout moment of the packet discarding timer and a current value of the packet discarding timer. The timer #2 (for example, a remaining transmission delay timer) exists at the MAC layer, and the timer #2 may be used to determine the delay information of the to-be-transmitted data, for example, the remaining transmission delay budget.

After receiving the first value, the MAC layer may set a value of the timer #2 to the first value, and start or restart the timer #2. For example, the first value is 5 ms, and the MAC layer may set the value of the timer #2 to 5 ms. In this scenario, for each piece of to-be-transmitted data, the MAC layer may include a corresponding timer #2. Optionally, in the method shown in FIG. 9, a timer #2 may be configured for each data radio bearer (data radio bearer, DRB), or each LCH, or each LCG. For example, when it is configured that delay information needs to be reported on a DRB, the MAC layer may allocate a timer #2 to data of the DRB. On the contrary, when it is not configured that delay information needs to be reported on a DRB, the MAC layer may not allocate a timer #2 to data of the DRB. Optionally, the DRB in this example may be replaced with the LCH or the LCG.

The MAC layer may trigger and generate the indication information #b based on the value of the timer #2. For example, when the value of the timer #2 reaches (for example, less than or equal to) the threshold, the MAC layer may trigger the indication information #b. In this scenario, the threshold may be configured for the MAC layer. The delay information (for example, the remaining transmission delay budget) indicated by the indication information #b may be a current value of the timer #2 at a moment at which the indication information #b is sent. In this case, the delay information indicated by the indication information #b may be duration, a start moment of the duration is an initial transmission moment of the indication information #b, and an end moment of the duration is a timeout moment of the timer #1 or the timer #2.

Manner d2: A PDCP layer (for example, a PDCP entity) determines to trigger the indication information #b, and sends, to the MAC layer, information used to determine the delay information of the to-be-transmitted data; and the MAC layer generates the indication information #b based on the delay information.

For example, when the to-be-transmitted data reaches the PDCP layer, the PDCP layer starts a timer #1 (for example, a packet discarding timer) for the to-be-transmitted data. When a value of the timer #1 reaches a threshold, the PDCP layer determines to trigger the indication information #b. In this scenario, the threshold may be configured for the PDCP layer. For example, when the value of the packet discarding timer of the to-be-transmitted data reaches (for example, less than or equal to) the threshold, the PDCP layer sends signaling #1 to the MAC layer, and the signaling #1 indicates the MAC layer to trigger the indication information #b. The PDCP layer may further send a second value to the MAC layer, where the second value may be the threshold, or the second value may be a current value of the timer #1. The second value may be included in the signaling #1, or may be included in another message. This is not limited in this application. The MAC layer may set a value of a timer #3 to a second value, and start or restart the timer #3 (for example, a transmission delay timer). The MAC layer determines a sending moment of the indication information #b, and generates the indication information #b based on the sending moment of the indication information #b. The delay information that is of the to-be-transmitted data and that is indicated by the indication information #b is a value of the timer #3 when the indication information #b is sent, or is a value determined based on a value of the timer #3 when the indication information #b is sent, for example, a difference between a value corresponding to a timeout moment of the timer #3 and a value of the timer #3 when the indication information #b is sent.

Manner d3: A PDCP layer (for example, a PDCP entity) determines to trigger the indication information #b, determines the delay information of the to-be-transmitted data based on a sending moment of the indication information #b, and sends, to the MAC layer, information used to determine the delay information of the to-be-transmitted data; and the MAC layer generates the indication information #b based on the delay information.

For example, when the to-be-transmitted data reaches the PDCP layer, the PDCP layer starts a timer #1 (for example, a packet discarding timer) for the to-be-transmitted data. When a value of the timer #1 reaches (for example, is less than or equal to) a threshold, the PDCP layer determines to trigger the indication information #b. In this scenario, the threshold may be configured for the PDCP layer. For example, when the value of the packet discarding timer of the to-be-transmitted data reaches the threshold, the PDCP layer sends signaling #1 to the MAC layer, and the signaling #1 indicates the MAC layer to generate the indication information #b. After the MAC layer receives (dynamic or semi-persistent) indication information of an uplink scheduling grant, the MAC layer may send, to the PDCP layer, information used to determine the sending moment of the indication information #b. For example, the MAC layer may send the sending moment of the indication information #b to the PDCP layer. The PDCP layer may determine a third value based on the sending moment of the indication information #b, and send the third value to the MAC layer. The third value may indicate a remaining transmission delay budget of the to-be-transmitted data. Optionally, the third value may be a value of the timer #1 at the sending moment of the indication information #b, or a value determined based on a value of the timer #1 at the sending moment of the indication information #b, for example, a difference between a value corresponding to a timeout moment of the timer #1 and a value of the timer #1 at the sending moment of the indication information #b. After receiving the third value, the MAC layer may generate the indication information #b.

S902: The first apparatus sends the indication information #b; and correspondingly, the second apparatus receives the indication information #b.

Currently, when the to-be-transmitted data (for example, a PDCP SDU) reaches the PDCP layer, the PDCP layer starts a packet discarding timer for the to-be-transmitted data. The packet discarding timer may be configured by an access network device by using a semi-persistent message (for example, an RRC message). How the MAC layer determines the remaining transmission delay budget based on the packet discarding timer at the PDCP layer needs to be further studied.

According to the method shown in FIG. 9, the MAC layer of the first apparatus may accurately determine the delay information of the to-be-transmitted data based on the timer #1 (for example, the packet discarding timer) at the PDCP layer, for example, determine the remaining transmission delay budget. After receiving the indication information #b, the second apparatus may properly allocate a scheduling resource to the first apparatus based on the delay information of the to-be-transmitted data, for example, the remaining transmission delay budget of the to-be-transmitted data.

Based on a same technical concept as the foregoing method embodiments, an embodiment of this application provides a communication apparatus in FIG. 10, and the communication apparatus may be configured to perform functions of related steps in the foregoing method embodiments. The function may be implemented by hardware, or may be implemented by software or by hardware executing corresponding software. The hardware or the software includes one or more modules corresponding to the foregoing function. A structure of the communication apparatus is shown in FIG. 10, and includes an interface unit 1001 and a processing unit 1002. The communication apparatus 1000 may be a terminal or a module (for example, a circuit or a chip) in the terminal, or may be a logical node, a logical module, or software that can implement all or some functions of the terminal. Alternatively, the communication apparatus 1000 may be an access network device or a module (for example, a circuit or a chip) in the access network device, or may be a logical node, a logical module, or software that can implement all or some functions of the access network device. In addition, the communication apparatus 1000 may implement the communication method provided in the foregoing embodiments and examples of this application. Functions of the units in the communication apparatus 1000 are described below.

The interface unit 1001 is configured to input and/or output information. When outputting information, the interface unit 1001 may output information to another apparatus other than the communication apparatus 1000, or may output information to another unit in the communication apparatus 1000. In some manners, the interface unit 1001 may be implemented as at least one of a physical interface, a communication module, a communication interface, or an input/output interface. In some other manners, the interface unit 1001 may be implemented as an interface circuit, for example, a mobile communication module. The mobile communication module may include one or more of at least one antenna, at least one filter, a switch, a power amplifier, a low noise amplifier (low noise amplifier, LNA), and the like.

The processing unit 1002 may be configured to support the communication apparatus 1000 in performing processing actions in the foregoing method embodiments. The processing unit 1002 may be implemented as a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any conventional processor, or the like.

In an implementation, the communication apparatus 1000 is used in the first apparatus in the embodiment of this application shown in FIG. 3. The following describes specific functions of the processing unit 1002 in the implementation.

The processing unit 1002 is configured to receive first information via the interface unit 1001, where the first information indicates a first time period; and send first indication information on a first CGO via the interface unit 1001, where the first CGO is not within the first time period, the first indication information indicates whether each of N CGOs is used, the first indication information is determined based on a data amount of first data, the first data is obtained by the first apparatus before a start moment of the first CGO, and N is a positive integer.

In some possible manners, the processing unit 1002 is further configured to send second indication information on a second CGO via the interface unit 1001, where the second indication information is not determined based on the data amount, the second indication information indicates that M CGOs are used, the second CGO is within the first time period, M is a positive integer, and the M CGOs include a part or all of the N CGOs; or skip sending, on the second CGO, third indication information indicating whether the M CGOs are used, where M is determined by the first apparatus based on second information.

Optionally, the processing unit 1002 is further configured to: before sending the first indication information on the first CGO, receive third information via the interface unit 1001, and determine a first configured grant CG periodicity based on the third information, where the first time period is within the first CG periodicity, and a start moment of the first time period is the same as a start moment of the first CG periodicity, or an interval between the start moment of the first time period and the start moment of the first CG periodicity is a first time interval.

In some examples, the processing unit 1002 is further configured to: before sending the first indication information on the first CGO, determine a second time period, where the first CGO is within the second time period, the second time period is within the first CG periodicity, and an interval between a start moment of the second time period and the start moment of the first CG periodicity is a second time interval.

In some possible manners, the processing unit 1002 is further configured to determine a third time period, where when N1 CGOs in the N CGOs are within a third time period, the first indication information indicates that the N1 CGOs are used, and N1 is a positive integer less than or equal to N.

In another implementation, the communication apparatus 1000 is used in the second apparatus in the embodiment of this application shown in FIG. 3. The following describes specific functions of the processing unit 1002 in the implementation.

The processing unit 1002 is configured to send first information via the interface unit 1001, where the first information indicates a first time period; and receive first indication information on a first CGO via the interface unit 1001, where the first CGO is not within the first time period, the first indication information indicates whether each of N CGOs is used, the first indication information is determined based on a data amount of first data, the first data is obtained by the first apparatus before a start moment of the first CGO, and N is a positive integer.

In some possible manners, the processing unit 1002 is further configured to receive second indication information on a second CGO via the interface unit 1001, where the second indication information is not determined based on the data amount, the second indication information indicates that M CGOs are used, the second CGO is within the first time period, M is a positive integer, the M CGOs include a part or all of the N CGOs, and M is determined by the first apparatus based on second information.

Optionally, the processing unit 1002 is further configured to: before receiving the first indication information on the first CGO, send third information via the interface unit 1001, where the third information is used to determine a first CG periodicity, the first time period is within the first CG periodicity, and a start moment of the first time period is the same as a start moment of the first CG periodicity, or an interval between the start moment of the first time period and the start moment of the first CG periodicity is a first time interval.

In some examples, the processing unit 1002 is further configured to: before receiving the first indication information on the first CGO, send fourth information via the interface unit 1001, where the fourth information indicates a third time interval, and a time interval between the start moment of the N CGOs and the end moment of the first CGO is the third time interval.

In still another implementation, the communication apparatus 1000 is used in the first apparatus in the embodiment of this application shown in FIG. 5. The following describes specific functions of the processing unit 1002 in the implementation.

The processing unit 1002 is configured to determine a second time period; and send first indication information on a first CGO via the interface unit 1001, where the first CGO is within the second time period, the first indication information indicates whether each of N CGOs is used, the first indication information is determined based on a data amount of first data, the first data is obtained by the first apparatus before a start moment of the first CGO, and N is a positive integer.

In yet another implementation, the communication apparatus 1000 is used in the second apparatus in the embodiment of this application shown in FIG. 5. The following describes specific functions of the processing unit 1002 in the implementation.

The processing unit 1002 is configured to receive first indication information on a first CGO via the interface unit 1001, where the first CGO is within a second time period, the first indication information indicates whether each of N CGOs is used, the first indication information is determined based on a data amount of first data, the first data is obtained by a first apparatus before a start moment of the first CGO, and N is a positive integer.

In yet another implementation, the communication apparatus 1000 is used in the first apparatus in the embodiment of this application shown in FIG. 6. The following describes specific functions of the processing unit 1002 in the implementation.

The processing unit 1002 is configured to determine a first CG, where the first CG includes a first CGO, the first CGO is used to transmit a first MAC PDU, and the first MAC PDU is a de-prioritized MAC PDU; and send first indication information on a second CGO via the interface unit 1001, where the first indication information indicates that the first CGO is not used, and the second CGO is before the first CGO.

In some possible manners, the processing unit 1002 is further configured to: before sending the first indication information on the second CGO, determine a second CG, where the second CG includes a third CGO, and a resource corresponding to the first CGO overlaps a resource corresponding to the third CGO.

Optionally, the processing unit 1002 is further configured to: before sending the first indication information on the second CGO, determine, at a first moment, that the first CGO is used to transmit the first MAC PDU; and determine, at a second moment, that the first MAC PDU is the de-prioritized MAC PDU, where the first moment is earlier than the second moment.

In some examples, the processing unit 1002 is further configured to: before sending the first indication information on the second CGO, receive first configuration information via the interface unit 1001, where the first configuration information indicates to send the first indication information on a CGO of the first CG.

In yet another implementation, the communication apparatus 1000 is used in the second apparatus in the embodiment of this application shown in FIG. 6. The following describes specific functions of the processing unit 1002 in the implementation.

The processing unit 1002 is configured to send first information via the interface unit 1001, where the first information indicates a first CG, the first CG includes a first CGO, the first CGO is used to transmit a first MAC PDU, and the first MAC PDU is a de-prioritized MAC PDU; and receive first indication information on a second CGO via the interface unit 1001, where the first indication information indicates that the first CGO is not used, and the second CGO is before the first CGO.

In some possible manners, the processing unit 1002 is further configured to: before receiving the first indication information on the second CGO, send second information via the interface unit 1001, where the second information indicates a second CG, the second CG includes a third CGO, and a resource corresponding to the first CGO overlaps a resource corresponding to the third CGO.

In some possible manners, the processing unit 1002 is further configured to: before receiving the first indication information on the second CGO, send first configuration information via the interface unit 1001, where the first configuration information indicates to send the first indication information on a CGO of the first CG.

For more detailed descriptions of the processing unit 1002 and the interface unit 1001, directly refer to related descriptions in the method embodiments shown in FIG. 3 and FIG. 5. Details are not described herein again.

It should be noted that, in the foregoing embodiments of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) or a processor (processor) to perform all or a part of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 11, and the communication apparatus may be configured to perform related steps in the foregoing method embodiments. The communication apparatus may be a terminal or a module (for example, a circuit or a chip) in the terminal, or may be a logical node, a logical module, or software that can implement all or some functions of the terminal. Alternatively, the communication apparatus may be an access network device or a module (for example, a circuit or a chip) in the access network device, or may be a logical node, a logical module, or software that can implement all or some functions of the access network device. In addition, the communication apparatus may implement the communication method provided in the foregoing embodiments and examples of this application, and has a function of the communication apparatus shown in FIG. 10. With reference to FIG. 11, the communication apparatus 1100 includes a processor 1102. Optionally, the communication apparatus 1100 further includes an interface circuit 1101 and a memory 1103. The interface circuit 1101, the processor 1102, and the memory 1103 are coupled to each other.

Optionally, the interface circuit 1101, the processor 1102, and the memory 1103 are coupled to each other via a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 11, but this does not mean that there is only one bus or only one type of bus.

The interface circuit 1101 is configured to input and/or output information. When outputting information, the interface circuit 1101 may output information to another apparatus other than the communication apparatus 1100, or may output information to another unit in the communication apparatus 1100. For example, the interface circuit 1101 may be implemented as at least one of a physical interface, a communication module, a communication interface, an input/output interface, and a mobile communication module. The mobile communication module may include one or more of at least one antenna, at least one filter, a switch, a power amplifier, an LNA, and the like.

The processor 1102 may be configured to support the communication apparatus 1100 in performing processing actions in the foregoing method embodiments. When the communication apparatus 1100 is configured to implement the foregoing method embodiments, the processor 1102 may be further configured to implement functions of the foregoing processing unit 1002. The processor 1102 may be a CPU, or may be another general-purpose processor, a DSP, an ASIC, an FPGA or another programmable logic device, a transistor logic device, a hardware component, or any combination thereof. The general-purpose processor may be a microprocessor, or any conventional processor, or the like.

In an implementation, the communication apparatus 1100 is used in the first apparatus in the embodiment of this application shown in FIG. 3. The following describes specific functions of the processor 1102 in the implementation.

The processor 1102 is configured to receive first information via the interface circuit 1101, where the first information indicates a first time period; and send first indication information on a first CGO via the interface circuit 1101, where the first CGO is not within the first time period, the first indication information indicates whether each of N CGOs is used, the first indication information is determined based on a data amount of first data, the first data is obtained by the first apparatus before a start moment of the first CGO, and N is a positive integer.

In another implementation, the communication apparatus 1100 is used in the second apparatus in the embodiment of this application shown in FIG. 3. The following describes specific functions of the processor 1102 in the implementation.

The processor 1102 is configured to send first information via the interface circuit 1101, where the first information indicates a first time period; and receive first indication information on a first CGO via the interface circuit 1101, where the first CGO is not within the first time period, the first indication information indicates whether each of N CGOs is used, the first indication information is determined based on a data amount of first data, the first data is obtained by the first apparatus before a start moment of the first CGO, and N is a positive integer.

In still another implementation, the communication apparatus 1100 is used in the first apparatus in the embodiment of this application shown in FIG. 5. The following describes specific functions of the processor 1102 in the implementation.

The processor 1102 is configured to determine a second time period; and send first indication information on a first CGO via the interface circuit 1101, where the first CGO is within the second time period, the first indication information indicates whether each of N CGOs is used, the first indication information is determined based on a data amount of first data, the first data is obtained by the first apparatus before a start moment of the first CGO, and N is a positive integer.

In yet another implementation, the communication apparatus 1100 is used in the second apparatus in the embodiment of this application shown in FIG. 5. The following describes specific functions of the processor 1102 in the implementation.

The processor 1102 is configured to receive first indication information on a first CGO via the interface circuit 1101, where the first CGO is within a second time period, the first indication information indicates whether each of N CGOs is used, the first indication information is determined based on a data amount of first data, the first data is obtained by a first apparatus before a start moment of the first CGO, and N is a positive integer.

In yet another implementation, the communication apparatus 1100 is used in the first apparatus in the embodiment of this application shown in FIG. 6. The following describes specific functions of the processor 1102 in the implementation.

The processor 1102 is configured to determine a first CG, where the first CG includes a first CGO, the first CGO is used to transmit a first MAC PDU, and the first MAC PDU is a de-prioritized MAC PDU; and send first indication information on a second CGO via the interface circuit 1101, where the first indication information indicates that the first CGO is not used, and the second CGO is before the first CGO.

In yet another implementation, the communication apparatus 1100 is used in the second apparatus in the embodiment of this application shown in FIG. 6. The following describes specific functions of the processor 1102 in the implementation.

The processor 1102 is configured to send first information via the interface circuit 1101, where the first information indicates a first CG, the first CG includes a first CGO, the first CGO is used to transmit a first MAC PDU, and the first MAC PDU is a de-prioritized MAC PDU; and receive first indication information on a second CGO via the interface circuit 1101, where the first indication information indicates that the first CGO is not used, and the second CGO is before the first CGO.

For the specific functions of the processor 1102, refer to the descriptions in the communication method provided in the foregoing embodiments and examples of this application, and the specific function descriptions of the communication apparatus 1000 in the embodiment of this application shown in FIG. 10. Details are not described herein again.

The memory 1103 is configured to store program instructions, data, and/or the like. Specifically, the program instructions may include program code, and the program code includes computer operation instructions. The memory 1103 may include a RAM, and may further include a non-volatile memory (non-volatile memory), for example, at least one magnetic disk memory. The processor 1102 executes the program instructions stored in the memory 1103, and uses the data stored in the memory 1103, to implement the foregoing functions, so as to implement the communication method provided in the foregoing embodiments of this application. The memory 1103 may be integrated with the processor 1102, or may be a memory outside the communication apparatus.

It may be understood that the memory 1103 in the FIG. 11 of this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the method described in this specification is intended to include, but not limited to, these memories and any memory of another proper type.

Based on the foregoing embodiments, an embodiment of this application further provides a computer program product including computer-executable instructions. When the computer program product is run, the methods provided in the foregoing embodiments are performed.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of instructions or a data structure and can be accessed by a computer.

Based on the foregoing embodiments, an embodiment of this application further provides a chip. The chip reads a computer program stored in a memory, to implement the methods provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory stores a program and data that are necessary for the computer apparatus. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

Unless otherwise specified, all or some of any features in any different embodiments of this application may be freely combined, and a combined technical solution also falls within the scope of this application.

A person skilled in the art is to understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
receiving, by a first apparatus, first information, wherein the first information indicates a first time period; and
sending, by the first apparatus, first indication information on a first configured grant occasion CGO, wherein the first indication information indicates whether each of N CGOs is used, N is a positive integer, the first CGO does not belong to the first time period, the first indication information is determined based on a data amount of first data, and the first data is obtained by the first apparatus before a start moment of the first CGO.

2. The method according to claim 1, wherein the method further comprises:
sending, by the first apparatus, second indication information on a second CGO, wherein the second indication information indicates that M CGOs are used, M is a positive integer, the M CGOs comprise a part or all of the N CGOs, the second indication information is not determined based on the data amount, and the second CGO is within the first time period; or
skipping sending, by the first apparatus on the second CGO, third indication information indicating whether the M CGOs are used, wherein
M is determined by the first apparatus based on second information.

3. The method according to claim 1 or 2, wherein before sending, by the first apparatus, the first indication information on the first CGO, the method further comprises:
receiving, by the first apparatus, third information, and determining, based on the third information, a first configured grant CG periodicity, wherein the first time period is within the first CG periodicity, and a start moment of the first time period is the same as a start moment of the first CG periodicity, or an interval between the start moment of the first time period and the start moment of the first CG periodicity is a first time interval.

4. The method according to any one of claims 1 to 3, wherein before sending, by the first apparatus, the first indication information on the first CGO, the method further comprises:
determining, by the first apparatus, a second time period, wherein the first CGO is within the second time period, the second time period is within the first CG periodicity, and an interval between a start moment of the second time period and the start moment of the first CG periodicity is a second time interval.

5. The method according to claim 4, wherein an end moment of the second time period is an end moment of the first CG periodicity, or the end moment of the second time period is an end moment of a third CGO, and the third CGO is a last valid CGO in the first CG periodicity.

6. The method according to claim 4 or 5, wherein the second time interval is the same as duration of the first time period.

7. The method according to any one of claims 1 to 6, wherein a start moment of the N CGOs is later than an end moment of the first CGO.

8. The method according to claim 7, wherein the start moment of the N CGOs is the same as the end moment of the first CGO, or a time interval between the start moment of the N CGOs and the end moment of the first CGO is a third time interval, the third time interval is determined by the first apparatus based on fourth information, and the fourth information is received by the first apparatus.

9. The method according to any one of claims 1 to 6, wherein the N CGOs comprise the first CGO, a start moment of the N CGOs is a start moment of a fourth CGO, and the fourth CGO is a 1^{st} valid CGO in the first CG periodicity.

10. The method according to claim 9, wherein the N CGOs are within the first CG periodicity.

11. The method according to any one of claims 1 to 10, further comprising:
determining, by the first apparatus, a third time period, wherein
when N1 CGOs in the N CGOs are within the third time period, the first indication information indicates that the N1 CGOs are used, and N1 is a positive integer less than or equal to N.

12. The method according to claim 11, wherein the third time period is within the first CG periodicity, a start moment of the third time period is the same as the start moment of the first CG periodicity, or an interval between the start moment of the third time period and the start moment of the first CG periodicity is a fourth time interval, and the first CG periodicity is determined by the first apparatus based on the third information.

13. The method according to claim 12, wherein an end moment of the third time period is the same as the end moment of the first CG periodicity, or the end moment of the third time period is the end moment of the third CGO, wherein the third CGO is the last valid CGO in the first CG periodicity, or an interval between the end moment of the third time period and the end moment of the first CG periodicity is a fifth time interval, or an interval between the end moment of the third time period and the start moment of the first CG periodicity is a sixth time interval.

14. The method according to any one of claims 11 to 13, wherein the first CGO and the N1 CGOs are within different CG periodicities.

15. A communication method, wherein the method comprises:
sending, by a second apparatus, first information, wherein the first information indicates a first time period; and
receiving, by the second apparatus, first indication information on a first configured grant occasion CGO, wherein the first indication information indicates whether each of N CGOs is used, the first CGO is not within the first time period, the first indication information is determined based on a data amount of first data, the first data is obtained by a first apparatus before a start moment of the first CGO, and N is a positive integer.

16. The method according to claim 15, wherein the method further comprises:
receiving, by the second apparatus, second indication information on a second CGO, wherein the second indication information indicates that M CGOs are used, M is a positive integer, the M CGOs comprise a part or all of the N CGOs, the second indication information is not determined based on the data amount, the second CGO is within the first time period, and M is determined by the first apparatus based on second information.

17. The method according to claim 15 or 16, wherein before receiving, by the second apparatus, the first indication information on the first CGO, the method further comprises:
sending, by the second apparatus, third information, wherein the third information is used to determine a first configured grant CG periodicity, the first time period is within the first CG periodicity, and a start moment of the first time period is the same as a start moment of the first CG periodicity, or an interval between the start moment of the first time period and the start moment of the first CG periodicity is a first time interval.

18. The method according to any one of claims 15 to 17, wherein the first CGO is within a second time period, the second time period is within the first CG periodicity, and an interval between a start moment of the second time period and the start moment of the first CG periodicity is a second time interval.

19. The method according to claim 18, wherein an end moment of the second time period is an end moment of the first CG periodicity, or the end moment of the second time period is an end moment of a third CGO, and the third CGO is a last valid CGO in the first CG periodicity.

20. The method according to claim 18 or 19, wherein the second time interval is the same as duration of the first time period.

21. The method according to any one of claims 15 to 20, wherein a start moment of the N CGOs is later than an end moment of the first CGO.

22. The method according to claim 21, wherein the start moment of the N CGOs is the same as the end moment of the first CGO; or
before receiving, by the second apparatus, the first indication information on the first CGO, the method further comprises: sending, by the second apparatus, fourth information, wherein the fourth information indicates a third time interval, and a time interval between the start moment of the N CGOs and the end moment of the first CGO is the third time interval.

23. The method according to any one of claims 15 to 20, wherein the N CGOs comprise the first CGO, a start moment of the N CGOs is a start moment of a fourth CGO, and the fourth CGO is a 1^{st} valid CGO in the first CG periodicity.

24. The method according to claim 23, wherein the N CGOs are within the first CG periodicity.

25. The method according to any one of claims 15 to 24, wherein when N1 CGOs in the N CGOs are within a third time period, the first indication information indicates that the N1 CGOs are used, and N1 is a positive integer less than or equal to N.

26. The method according to claim 25, wherein the third time period is within the first CG periodicity, a start moment of the third time period is the same as the start moment of the first CG periodicity, or an interval between the start moment of the third time period and the start moment of the first CG periodicity is a fourth time interval, and the first CG periodicity is determined by the second apparatus.

27. The method according to claim 26, wherein an end moment of the third time period is the same as the end moment of the first CG periodicity, or the end moment of the third time period is the end moment of the third CGO, wherein the third CGO is the last valid CGO in the first CG periodicity, or an interval between the end moment of the third time period and the end moment of the first CG periodicity is a fifth time interval, or an interval between the end moment of the third time period and the start moment of the first CG periodicity is a sixth time interval.

28. The method according to any one of claims 25 to 27, wherein the first CGO and the N1 CGOs are within different CG periodicities.

29. A communication method, wherein the method comprises:
determining, by a first apparatus, a first configured grant CG, wherein the first CG comprises a first configured grant occasion CGO, the first CGO is used to transmit a first medium access control protocol data unit MAC PDU, and the first MAC PDU is a de-prioritized MAC PDU; and
sending, by the first apparatus, first indication information on a second CGO, wherein the first indication information indicates that the first CGO is not used, and the second CGO is before the first CGO.

30. The method according to claim 29, wherein before sending, by the first apparatus, the first indication information on the second CGO, the method further comprises:
determining, by the first apparatus, a second CG, wherein the second CG comprises a third CGO, and a resource corresponding to the first CGO overlaps a resource corresponding to the third CGO.

31. The method according to claim 29 or 30, wherein before sending, by the first apparatus, the first indication information on the second CGO, the method further comprises:
determining, by the first apparatus at a first moment, that the first CGO is used to transmit the first MAC PDU; and
determining, by the first apparatus at a second moment, that the first MAC PDU is the de-prioritized MAC PDU, wherein the first moment is earlier than the second moment.

32. The method according to any one of claims 29 to 31, wherein before sending, by the first apparatus, the first indication information on the second CGO, the method further comprises:
receiving, by the first apparatus, first configuration information, wherein the first configuration information indicates to send the first indication information on a CGO of the first CG.

33. A communication method, wherein the method comprises:
sending, by a second apparatus, first information, wherein the first information indicates a first configured grant CG, the first CG comprises a first configured grant occasion CGO, the first CGO is used to transmit a first medium access control protocol data unit MAC PDU, and the first MAC PDU is a de-prioritized MAC PDU; and
receiving, by the second apparatus, first indication information on a second CGO, wherein the first indication information indicates that the first CGO is not used, and the second CGO is before the first CGO.

34. The method according to claim 33, wherein before receiving, by the second apparatus, the first indication information on the second CGO, the method further comprises:
sending, by the second apparatus, second information, wherein the second information indicates a second CG, the second CG comprises a third CGO, and a resource corresponding to the first CGO overlaps a resource corresponding to the third CGO.

35. The method according to claim 33 or 34, wherein before receiving, by the second apparatus, the first indication information on the second CGO, the method further comprises:
sending, by the second apparatus, first configuration information, wherein the first configuration information indicates to send the first indication information on a CGO of the first CG.

36. A communication apparatus, comprising a processor, wherein when a computer program or computer instructions are run by the processor, the method according to any one of claims 1 to 35 is performed.

37. A computer-readable storage medium, wherein the computer-readable storage medium stores a computer program or computer instructions, and when the computer program or the computer instructions are executed by a communication apparatus, the method according to any one of claims 1 to 35 is performed.

38. A computer program product, wherein the computer program product comprises computer program code, and when the computer program code is run, the method according to any one of claims 1 to 35 is performed.
